# EUROPÄISCHE PATENTSCHRIFT

(11) **EP 1 042 427 B1**
(45) Veröffentlichungstag und Bekanntmachung des Hinweises auf die Patenterteilung: **09.06.2004**
(21) Anmeldenummer: 98966261.4
(22) Anmeldetag: 08.12.1998
(51) Int. Cl.: C09K 9/02, G02F 1/15

(54) **UV-GESCHÜTZTE ELEKTROCHROME VORRICHTUNG**
UV PROTECTED ELECTROCHROMIC DEVICE
DISPOSITIF ELECTROCHROME PROTEGE CONTRE LES UV

(30) Priorität: 19.12.1997 DE 19756740
(43) Veröffentlichungstag der Anmeldung: 11.10.2000
(73) Patentinhaber: Bayer Chemicals AG, 51368 Leverkusen (DE)
(72) Erfinder: BERNETH, Horst, D-51373 Leverkusen (DE); DUFF, Daniel-Gordon, D-51373 Leverkusen (DE); HOHEISEL, Werner, D-51061 Köln (DE)
(86) Internationale Anmeldenummer: PCT/EP1998/007976
(87) Internationale Veröffentlichungsnummer: WO 1999/032574

(56) Entgegenhaltungen:
- EP-A- 0 752 612
- WO-A-92/21315
- WO-A-93/06164
- WO-A-94/23333
- WO-A-95/09895
- WO-A-97/35227
- WO-A-97/45767
- WO-A-98/35267
- US-A- 5 280 380
- US-A- 5 604 626
- HAGFELD A ET AL: "NANOSTRUCTURED TIO2 SEMICONDUCTOR ELECTRODES MODIFIED WITH SURFACE ATTACHED VIOLOGENS: APPLICATIONS FOR DISPLAYS AND SMART WINDOWS" PROCEEDINGS OF THE SPIE, Bd. 2531, Nr. 1/04, 12. Juli 1995, Seiten 60-69, XP000671702
- HAGFELDT A ET AL: "FAST ELECTROCHROMIC SWITCHING WITH NANOCRYSTALLINE OXIDE SEMICONDUCTOR FILMS" JOURNAL OF THE ELECTROCHEMICAL SOCIETY, Bd. 141, Nr. 7, 1. Juli 1994, Seiten L82-L84, XP000469359
- AEGERTER, MICHEL A. ET AL: "Electrochromism in materials prepared by the sol - gel process" J. SOL-GEL SCI. TECHNOL. (1997), 8(1/2/3), 689-696 CODEN: JSGTEC;ISSN: 0928-0707, XP002101901
- NAZEERUDDIN M K ET AL: "CONVERSION OF LIGHT TO ELECTRICITY BY CIS-X2BIS(2,2'-BIPYRIDYL -4,4'-DICARBOXYLATE)RUTHENIUM(II) CHARGE-TRANSFER SENSITIZERS (X = C1 -,BR-,I-,CN-, AND SCN-) ON NANOCRYSTALLINE TIO2 ELECTRODES" JOURNAL OF THE AMERICAN CHEMICAL SOCIETY, Bd. 115, Nr. 17, 1. Juli 1993, Seiten 6382-6390, XP000612089

## Beschreibung

Die vorliegende Erfindung betrifft eine UV-geschützte elektrochrome Vorrichtung.

Elektrochrome Vorrichtungen sind bereits bekannt, beispielsweise aus D. Theis in Ullmann's Encyclopedia of Industrial Chemistry, Vol. A 8, S. 622, Verlag Chemie 1987 und WO-A 94/23333. Man unterscheidet zwei Grundtypen:
Typ 1: vollflächige elektrochrome Vorrichtung.
Typ 2: elektrochrome Anzeigevorrichtungen mit strukturierten Elektroden.

Typ 1 findet beispielsweise bei elektrisch abdunkelbaren Fensterscheiben oder elektrisch abblendbaren Autospiegeln Anwendung. Solche Vorrichtungen sind beispielsweise aus US-A-4 902 108 bekannt.

Typ 2 findet bei Segment- und Matrixanzeigen Verwendung. Solche Anzeigevorrichtungen sind beispielsweise in der Deutschen Patentanmeldung P 19631 728 vorgeschlagen worden. Derartige Vorrichtungen können transmissiv oder bei Verspiegelung reflektiv betrachtet werden.

In WO-A 94/23333 werden elektrochrome Materialien verschiedener Bauweise gegenübergestellt, die aber nicht als Anzeigevorrichtungen verwendet werden:
Bauweise a: Die elektrochromen Substanzen liegen als Film oder Schicht fest auf den Elektroden (vgl. Ullmann, s.o.).
Bauweise b: Die elektrochromen Substanzen werden beim Redoxprozeß auf den Elektroden als Schicht abgeschieden (vgl. Ullmann, s.o.).
Bauweise c: Die elektrochromen Substanzen bleiben permanent in Lösung.

Für Bauweise a) ist als elektrochromes Material das Paar Wolframoxid/Palladiumhydrid das bekannteste.

Für Bauweise b) sind Viologene als elektrochrome Substanzen beschrieben worden. Diese Vorrichtungen sind nicht selbstlöschend, das erzeugte Bild bleibt also nach dem Abschalten des Stromes bestehen und kann nur durch Umpolen der Spannung wieder gelöscht werden. Solche Vorrichtungen sind nicht besonders beständig und erlauben keine hohe Zahl an Schaltzyklen.

Zudem sind insbesondere solche mit Wolfraimoxid/Palladiumhydrid aufgebauten Zellen wegen der Lichtstreuung an diesen elektrochromen Schichten nicht im durchfallenden Licht zu betreiben, sondern lediglich reflektiv.

Aus Elektrokhimiya,13, 32-37 (1977), 13, 404-408, 14, 319-322 (1978), US-A 4 902 108 und US-A 5 140 455 ist ein elektrochromes System der letztgenannten Bauweise c) bekannt. In einer elektrochromen Zelle, die aus leitfähig beschichteten Glasplatten aufgebaut ist, ist eine Lösung eines Paares elektrochromer Substanzen in einem inerten Lösungsmittel enthalten.

Als Paar von elektrochromen Substanzen wird je eine elektrochemische reversibel reduzierbare und eine reversibel oxidierbare Substanz verwendet. Beide sind im Grundzustand farblos oder nur schwach gefärbt. Unter Einfluß einer elektrischen Spannung wird die eine Substanz reduziert, die andere oxidiert, wobei beide farbig werden. Nach Abschalten der Spannung bildet sich bei beiden Substanzen der Grundzustand wieder zurück, wobei Entfärbung bzw. Farbaufhellung auftritt.

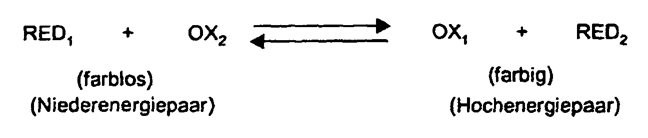

Aus US-A-4 902 108 ist bekannt, dass solche Paare von Redoxsubstanzen geeignetsind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Gemäß WO-A 94/23333 haben derartige Lösungssysteme der Bauweise c jedoch gravierende Nachteile.

Die Diffusion der elektrochromen Substanzen in der Lösung bedingt unscharfe Farbgrenzen und verursacht einen hohen Stromverbrauch zur Aufrechterhaltung des gefärbten Zustandes, da die gefärbten Substanzen durch Rekombination und Reaktion an der jeweils gegenüberliegenden Elektrode permanent abgebaut werden.

Dennoch sind für solche elektrochromen Zellen der Bauweise c verschiedene Anwendungen beschrieben worden. So können sie beispielsweise als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (vgl. z. B. US-A 3 280 701, US-A 4 902 108, EP-A 0 435 689). Weiterhin können solche Zellen auch in Fensterscheiben oder Auto-Sonnendächern eingesetzt werden, wo sie nach Anlegen einer Spannung das Sonnenlicht abdunkeln. Ebenfalls beschrieben ist die Anwendung solcher Vorrichtungen als elektrochrome Anzeigevorrichtungen, beispielsweise in Segment- oder Matrix-Displays mit strukturierten Elektroden (Deutsche Patentanmeldung P 196 31 728).

Die elektrochromen Zellen bestehen normalerweise aus einem Paar Glasplatten, von denen im Falle des Autospiegels eine verspiegelt ist. Eine Seite dieser Scheiben ist mit einer lichtdurchlässigen, elektrisch leitfähigen Schicht, beispielsweise Indium-Zinn-Oxid (ITO), flächig beschichtet, wobei im Falle der Anzeigevorrichtungen diese leitfähige Beschichtung in elektrisch voneinander getrennte Segmente aufgeteilt ist, die einzeln kontaktiert sind. Aus diesen Scheiben wird nun eine Zelle aufgebaut, indem sie mit ihrer einander zugewandten elektrisch leitfähig beschichteten Seite über einen Dichtungsring zu einer Zelle verbunden-werden. In diese Zelle wird nun über eine Öffnung eine elektrochrome Flüssigkeit eingefüllt und die Zelle dicht verschlossen. Über die ITO-Schichten werden die beiden Scheiben mit einer Spannungsquelle verbunden.

Die vorstehend beschriebenen elektrochromen Vorrichtungen zeigen in der Regel eine Empfindlichkeit gegenüber Licht, insbesondere UV-Licht. Es sind deshalb beispielsweise in US-A 5 280 380 elektrochrome Vorrichtungen beschrieben, die UV-Stabilisatoren enthalten.

Als UV-Lichtabsorber werden bisher meist organische Verbindungen verwendet, die in dem relevanten Wellenlängenbereich eine molekulare Absorptionsbande aufweisen und nicht im sichtbaren Spektralbereich absorbieren. Nachteilig bei diesen Verbindungen ist, dass sie in teilweise hohen Konzentrationen in der elektrochromen Lösung oder in einer Polymerschicht, die auf eine der beiden Platten aufgebracht ist, gelöst sein müssen. Häufig ist die Löslichkeit in diesen Medien aber begrenzt und folglich auch die Wirksamkeit des UV-Absorbers. Weiterhin können sie unter Lichteinwirkung ausbleichen und/oder aus dem polymeren Substrat ausdampfen oder ausgewaschen werden.

Es ist auch bekannt, dass anorganische Festkörpermaterialien UV-Licht absorbieren können.

Diese anorganischen Partikel können je nach deren Größe und Wahl des Materials Bereiche des schädlichen UV-Lichtes absorbieren und/oder streuen. Dabei ist die Absorption der Streuung von Licht vorzuziehen, da insbesondere bei einer Einarbeitung der Partikel in das zu schützende Material gestreute Photonen dieses weiterhin schädigen können. Weiter führt ein zu großer Streuanteil des Lichts zu einer Trübung des zu schützenden Materials. Aus Absorption and Scattering of Light by Small Particles, C. F. Bohren, D. R. Huffman, S. 93 bis 104 und 130 bis 141, 1983 ist bekannt, dass mit abnehmender Größe der Partikel deren Absorptionsvermögen von Licht höher ist als deren Fähigkeit, Licht zu streuen. Für einen transparenten UV-Lichtabsorber sind also nur sehr kleine Partikel geeignet. Um auch Farblosigkeit des UV-Lichtabsorbers zu gewährleisten, muß das Material der Partikel eine Absorptionskante im Wellenlängenbereich zwischen etwa 300 nm und 400 nm besitzen. Nach WO-A 93/ 06164 eignen sich für eine solche Wirkung Materialien mit einer Bandlücke zwischen 2,8 eV und 4,1 eV, was einem Wellenlängenbereich zwischen 303 nm und 445 nm entspricht. Für diesen Anwendungszweck werden aus dieser Materialklasse u.a. bereits TiO₂, ZnO, CeO₂, SiC eingesetzt, siehe beispielsweise WO-A 93/06164, WO-A 95/09895 und WO-A 92/21315.

WO 97/35227 beschreibt elektrochrome Vorrichtungen bestehend aus zwei einander zugewandten Platten, wobei auf einer der Platten auf der zugewandten Seite eine Halbleiterelektrode aus einem nanokristallinen Metalloxid mit einer Dicke von 0,1 bis 10 µm aufgetragen ist.

WO 97/45767 offenbart photoelektronische Vorrichtungen, welche ohne externe Spannungsquelle betrieben werden. Die genannten Vorrichtungen enthalten eine Platte, auf deren Innenseite eine Elektrode aufgebracht ist, welche mit einem halbleitenden Metalloxid überzogen ist.

In der US 5 604 626 werden photochrome Vorrichtungen beschrieben, welche sich von den in der vorliegenden Erfindungen beschriebenen elektrochrome Vorrichtungen durch das Fehlen einer externen Spannungsquelle unterscheiden.

Es bestand folglich die Aufgabe, UV-Absorber bereitzustellen, die die im Stand der Technik bekannten Nachteile nicht aufweisen und für den UV-Schutz elektrochromer Zellen bestens geeignet sind.

Es wurde nun gefunden, dass die oben beschriebenen elektrochromen Vorrichtungen durch Nanopartikel effektiv gegen Zerstörung durch UV-Licht geschützt werden können.

Gegenstand der Erfindung ist demnach eine elektrochrome Vorrichtung, bestehend aus zwei Platten oder Folien, von denen wenigstens eine transparent ist und die auf den einander zugewandten Seiten mit einer leitfähigen Schicht versehen sind, wobei wenigstens eine leitfähige Schicht transparent ist, und mit einem Dichtungsring miteinander verbunden sind, wobei durch die Platten oder Folien und den Dichtungsring ein Volumen definiert ist, in dem sich ein elektrochromes Medium befindet, und die Platten oder Folien mit einer Spannungsquelle verbunden sind, dadurch gekennzeichnet, dass die elektrochrome Vorrichtung durch Nanoteilchen mit einem mittleren Durchmesser kleiner als 500 nm vor UV-Licht geschützt ist, wobei die Nanoteilchen in einer Konzentration von 0,001 bis 30 Atom-% gleichmäßig dispergiert vorliegen in
a) wenigstens einer der zwei Platten oder Folien und/oder
b) einem Kunststoff oder Lack, wobei der Kunststoff oder Lack als Überzug auf wenigstens eine der beiden Platten oder Folien aufgetragen ist und/oder
c) dem elektrochromen Medium.

Die Platten bestehen aus Glas oder Kunststoff, die Folien aus Kunststoff oder speziellem Dünnglas.

In einer Ausführungsform der elektrochromen Vorrichtung sind die Nanoteilchen in dem elektrochromen System enthalten und/oder auf und/oder in wenigstens einer der beiden transparenten Platten oder Folien fixiert.

Erfindungsgemäß besonders bevorzugt sind elektrochrome Vorrichtungen, in denen das elektrochrome Medium eine elektrochrome Lösung darstellt, dadurch gekennzeichnet, dass die elektrochrome Vorrichtung durch Nanoteilchen vor UV-Licht geschützt ist.

Geeignete Nanoteilchen sind solche auf Basis SiC, AlSi, , Fe₂O₃, Fe₃O₄, TiO₂, ZnO, GaP, CeO₂, ZnS, SnO₂, Si_{y}Ge_{1-y}, WₓMo₁₋ₓO₃, NiO, Bi₂O₃, In₂O₃, HfO₂, BaTiO₃, CaTiO₃, Ge, AlP, GaN, worin 0,7≤y <1 und 0≤ x ≤1 sind.

Im Sinne der Erfindung besonders geeignete Nanoteilchen sind die aus der oben genannten Literatur und den Patentanmeldungen bekannten Materialien auf Basis TiO₂, ZnO, CeO₂, SiC, AlSi, Fe₂O₃, Fe₃O₄, WₓMo₁₋ₓO₃, BaTiO₃, CaTiO₃ oder Mischungen davon.

Eine Trübung durch die UV-Absorber-Partikel ist für eine elektrochrome Vorrichtung nicht akzeptabel, da bei den verschiedenen genannten Anwendungsgebieten wie Autospiegel oder Anzeigevorrichtung eine hohe Transmission des Lichts sowie insbesondere eine scharfe Abbildung gefordert wird. Radikalbildende Partikel sind insbesondere dann unbrauchbar, wenn sich diese Partikel in der elektrochromen Lösung befinden. Eine Wechselwirkung mit den in der Regel radikalischen oder radikalionischen, durch Elektrodenraktion gebildeten OX₁ und RED₂ würde in das oben aufgeführte Gleichgewicht eingreifen und zu ungewünschten Farbveränderungen und/oder zu unzureichender Farblöschung nach Abschalten der Spannung führen. Besonders bevorzugt sind Nanoteilchen mit einem mittleren Durchmesser von kleiner als 500 nm, bevorzugt von kleiner als 100 nm, besonders bevorzugt von kleiner als 50 nm, ganz besonders bevorzugt von kleiner als 20 nm.

Ganz besonders sind deshalb UV-Lichtabsorber bevorzugt, die überwiegend Partikel aus Silicium und/oder aus festen Verbindungen enthalten, in denen Silicium im stöchiometrischen Überschuß vorliegt. Vorteilhaft ist ein mittlerer Durchmesser von kleiner als 120 nm. Sie verfügen über vorteilhafte Eigenschaften, wie hohe Transparenz im sichtbaren Spektralbereich bei niedrigeren Partikelkonzentrationen, hohe Stabilität an Luft, hohe Umwelt- und Bioverträglichkeit und vollständige Abwesenheit von photokatalytischen Aktivitäten sowie das Herausfiltern von Licht im UVA- und UVB-Bereich mit hoher Effizienz.

Unter mittlerem Durchmesser ist das Maximum der Anzahlverteilung zu verstehen.

Bei elementarem Silicium handelt es sich um amorphes oder kristallines Silicium, bevorzugt um kristallines Silicium. Die Größe der Siliciumpartikel liegt vorzugsweise zwischen 1 nm und 120 nm, besonders bevorzugt zwischen 1 nm und 70 nm, ganz besonders bevorzugt zwischen 10 nm und 50 nm. Vorzugsweise weisen diese Partikel eine Größenverteilung mit einer maximalen Halbwertsbreite von 40 nm auf. Siliciumpartikel mit diesem mittleren Durchmesser werden vorzugsweise mittels Gasphasenreaktion (CVR) nach dem im US-A 5 472 477 beschriebenen Verfahren hergestellt. Ebenfalls möglich ist die Herstellung gemäß J. Phys. Chem., 97, S. 1224 bis 1230 (1973), J. Vac. Sci. Technol. A10, S. 1048 (1992) sowie Int. J. Heat Mass Transfer 31, S. 2236 (1988).

Unter den Begriff feste Verbindungen fallen bei Raumtemperatur feste Verbindungen, wie z.B. Silicide, CaSi₂ und/oder BaSi₂. Unter den Begriff Verbindungen in denen Silicium in stöchiometrischem Überschuß vorliegt, fallen vorzugsweise Verbindungen der Formel SiₓZ₁₋ₓ mit 0,5 < x ≤1, bevorzugt 0,7 < x ≤1und Z = C, N, O, Ge, Ca, Ba und Sr. Die Anwesenheit anderer Materialien verschiebt die energetische Lage der Absorptionskante in gewissen Grenzen und modifiziert die Form der Kante. Als feste Verbindungen sind hierbei SiₓC₁₋ₓ oder SiₓGe₁₋ₓ bevorzugt.

Bevorzugt sind Nanoteilchen aus allen bisher beschriebenen Materialien, die kugelförmig oder nahezu kugelförmig sind. Unter nahezu kugelförmig sind beispielsweise Ellipsoide zu verstehen mit einem Achsenverhältnis von 1:4, vorzugsweise 1:2.

Ebenfalls bevorzugt sind Nanoteilchen aus allen bisher beschriebenen Materialien, die eine Kern-Hüllenstruktur aufweisen. Die Hülle kann organisch modifiziert sein.

Die Hülle besteht beispielsweise aus einem Oxid des Materials des Nanoteilchens. Sie kann aber auch aus einem anderen Material bestehen, das im Sichtbaren transparent ist und dessen Brechungsindex dem des Nanoteilchens ähnlich ist. Die Dicke einer Oxidschicht kann beispielsweise zwischen 1 und 300 nm betragen.

In einer bevorzugten Ausführungsforrn der Erfindung weisen die festen Verbindungen, in denen Silicium im stöchiometrischen Überschuß vorliegt, eine Kern-Hüllen-Struktur auf. Bevorzugt ist dabei, dass dieser aus einem Kern aus Titannitrid und einer Hülle aus Silicium besteht, wobei der Silicium-Volumenanteil mindestens 30 % je Partikel ist.

Der mittlere Durchmesser der Partikel aller bisher beschriebenen Arten ist vorzugsweise kleiner als 120 nm, besonders bevorzugt kleiner als 100 nm, ganz besonders bevorzugt kleiner 50 nm ist. Diese weisen vorzugsweise eine Teilchengrößenverteilung mit einer maximalen Halbwertsbreite von 40 nm, vorzugsweise 30 nm, besonders bevorzugt 20 nm, auf.

Die Herstellung der festen Verbindungen, inklusive derer mit Kern-Hüllen-Struktur kann z.B. durch eine thermische Zersetzung eines Silicium-enthaltenden Gases, wie z.B. Silanen, Organosilanen oder SiCl₄, durchgeführt werden, so dass ein Aerosol entsteht (siehe J. Phys. Chem., 97, S. 1224 bis 1230 (1973), J. Vac. Sci. Technol. A10, S. 1048 (1992)). Durch Beimischungen weiterer Gase, die beispielsweise Germanium oder Kohlenstoff enthalten, resultieren entsprechend stöchiometrisch zusammengesetzte Verbindungen. Im Fall von festen Verbindungen mit einer Kern-Hüllen-Struktur wird zunächst der Kern mittels der zuvor beschriebenen Verfahren hergestellt und anschließend mittels Zersetzung oder Reaktion in der Gasphase entsprechend zusammengesetzter Gase, wie z.B. SiH₄ oder SiCl₄ zusammen mit H₂, die Hülle aufgebracht. Die thermische Zersetzung kann in einem Gasphasenreaktor, bevorzugt in einem CVR (Chemical Vapor Reaktion)-Reaktor, oder auch durch Laserabsorption (siehe Int. J. Heat Mass Transfer, 31, S. 2239 (1988) stattfinden. Die thermische Zersetzung von Gasen eignet sich besonders zur Herstellung kristalliner Partikel. Ebenfalls möglich ist die Herstellung über ein PECVD (Plasma Enhanced Chemical Vapor Deposition)-Verfahren (siehe J. Vac. Sci. Technol., A10, S. 1048 (1992)). Im letzten Verfahren entstehen amorphe Partikel, die durch eine thermische Nachbehandlung kristallinisiert werden können (siehe Nanostructured Materials, Vol. 6, S. 493 bis 496 (1995)).

Die in dem UV-Lichtabsorber enthaltenen Partikel können auch in Form von Agglomeraten vorliegen. Im Fall des Siliciums unterscheiden sich die optischen Eigenschaften der Agglomerate von denen der Primärpartikel, da sich durch die elektromagnetische Wechselwirkung der Partikel untereinander neue Absorptionskanäle bilden, die teilweise auch im sichtbaren Spektralbereich liegen.

Die im UV-Lichtabsorber enthaltenen Primärpartikel können auch von einer Oxidschicht umgeben sein. Dadurch wird ein direkter Kontakt der Primärpartikel und somit deren Agglomeration verhindert. Die Dicke der Oxidschicht beträgt vorzugsweise 1 nm bis 300 nm, besonders bevorzugt 10 bis 100 nm. Vorteilhafte Oxidschichten sind solche, deren Brechungsindex im sichtbaren Spektralbereich sehr ähnliche Werte hat wie die vor der UV-Strahlung zu schützenden Medien, wie z.B.: Polycarbonat, Polyurethan, organische Lösungen wie das elektrochrome Medium. Dadurch verringert sich die lichtstreuende Wirkung und die Matrix bleibt transparent. Diese Oxidschicht kann z.B. durch Zudosierung von Sauerstoff in den CVR-Reaktor nach der Herstellung der Partikel erfolgen.

In einer bevorzugten Ausführungsform enthält der erfindungsgemäße UV-Lichtabsorber zusätzlich Partikel, beispielsweise aus Oxiden und/oder Nitriden von Metallen, die im roten Spektralbereich von 600 nm < λ < 700 nm stärker absorbieren als im blau-grünen Spektralbereich von 400 nm < λ < 550 nm. Als solche Zusätze sind Partikel aus Titannitrid mit einem mittleren Durchmesser von 1 nm bis 400 nm, bevorzugt 10 nm bis 120 nm oder Agglomerate aus diesen Titannitrid-Primärpartikeln bevorzugt. Deren Herstellung kann z.B. gemäß US-A 5 472 477 erfolgen. In einer bevorzugten Ausführungsform enthält der UV-Lichtabsorber neben Silicium-Partikeln auch TiN-Partikel mit einem mittleren Durchmesser von 10 bis 120 nm. Dieser UV-Lichtabsorber wirkt sehr effektiv im UVA-Bereich und gewährleistet gleichzeitig eine Farbneutralität bei hoher Transparenz. Ebenfalls bevorzugt sind Zusätze in Form von Partikeln aus Aluminium-Natrium-Silikaten (Ultramarine Pigmente), z.B. erhältlich bei der Firma Nubiola S.A., unter der Bezeichnung Nubix® Pigmente. Weiterhin können sie als Zusätze Eisen(III)hexacyanoferrat(II) enthalten.

In einer weiteren Ausführungsform der Erfindung besteht der UV-Lichtabsorber vorzugsweise aus einer Mischung aus den Silizium enthaltenden Partikeln und aus Partikeln der folgenden Gruppe: Siliciumcarbid und/oder Oxiden der Metalle Titan, Cer, Wolfram, Zink, Zinn sowie Eisen. Durch solche Mischungen läßt sich die Absorptionskante insbesondere deren Steilheit manipulieren. Die Partikelgröße der zugemischten Partikel liegt vorzugsweise zwischen 1 nm und 200 nm. Auch diese sind u.a. nach dem in US-A 5 472 477 beschriebenen Verfahren erhältlich.

Materialien für elektrochrome Schichten sind entweder anorganische Schichten wie das weiter oben beschriebene System Wolframoxid/Palladiumhydrid oder organische Schichten, die beispielsweise aus elektrochromen Substanzen bestehen, wie sie im folgenden für die spezielle Anwendung in einer elektrochromen Lösung genannt sind. Insbesondere oligomere und polymere elektrochrome Substanzen dieser Art sind für Schichten geeignet sowie solche elektrochrome Substanzen, die beispielsweise durch die Wahl des Gegenions unlöslich gemacht werden.

Ebenfalls Gegenstand der Erfindung sind erfindungsgemäße elektrochrome Vorrichtungen, dadurch gekennzeichnet, dass sie als elektrochrome Lösung
a) ein Lösungsmittel,
b) in diesem Lösungsmittel gelöst mindestens eine reversibel oxidierbare Substanz RED₁, die durch Elektronenabgabe an einer Anode, und mindestens eine reversibel reduzierbare Substanz OX₂, die durch Elektronenaufnahme an einer Kathode in ihre jeweiligen Formen OX₁ bzw. RED₂ übergehen, wobei mit mindestens einer dieser Elektronenabgaben bzw. Elektronenaufnahmen eine Änderung der Extinktion im sichtbaren Bereich des Spektrums verbunden ist, und wobei nach Ladungsausgleich jeweils die ursprünglichen Formen RED₁ und OX₂ zurückgebildet werden, und
c) dispergierte Nanoteilchen enthalten, deren Abmessung und Konzentration in Anspruch 1 definiert sind.

Unter dispergierten Nanoteilchen sind die oben näher beschriebenen anorganischen Festkörpennaterialien zu verstehen.

Unter der Änderung der Extinktion im sichtbaren Bereich des Spektrums kann verstanden werden, dass
a) OX₂ und/oder RED₁ farblos sind oder nur schwach gefärbt, während die an der Kathode bzw. Anode gebildeten Formen RED₂ und/oder OX₁ gefärbt, vorzugsweise stark gefärbt sind,
b) wenigstens eine der beiden elektrochromen Substanzen OX₂ oder RED₁ gefärbt ist, während ihre an der Kathode bzw. Anode gebildeten Formen RED₂ bzw. OX₁ nicht oder nur schwach oder andersfarbig gefärbt sind.

Durch Auswahl der elektrochromen Verbindungen RED₁ und OX₂ und/oder Mischungen davon lassen sich beliebige monochrome Farbtöne einstellen. Für eine polychrome Farbdarstellung können zwei oder mehrere solcher elektrochromer Vorrichtungen flächig aufeinander gelegt werden, wobei jede dieser Vorrichtungen einen anderen Farbton erzeugen kann. Vorzugsweise wird ein solcher Stapel so aufgebaut, dass die sich berührenden Vorrichtungen eine lichtdurchlässige Platte gemeinsam haben, die dann auch auf beiden Seiten leitfähig beschichtet ist und je nach Ausfiihrung in Segmente unterteilt ist. Beispielsweise besteht dann ein Stapel aus drei elektrochromen Vorrichtungen aus mindestens vier Platten. Durch Einschalten von Segmenten in verschiedenen dieser gestapelten Vorrichtungen lassen sich mehrfarbige Anzeigen realisieren. Werden hintereinander liegende Segmente verschiedener solcher Vorrichtungen eingeschaltet, erhält man Mischfarben. So lassen sich im Rahmen einer Trichromie beliebige Farben darstellen, also beispielsweise bunte Bilder.

Im Sinne der Erfindung geeignete OX₂ und RED₁ sind solche Substanzen, die bei ihrer Reduktion bzw. Oxidation an der Kathode bzw. Anode in dem genannten Lösungsmittel Produkte RED₂ und OX₁ liefern, die keine chemische Folgereaktion eingehen, sondern komplett wieder zu OX₂ und RED₁ oxidiert bzw. reduziert werden können.

Im Sinne der Erfindung geeignete reduzierbare Substanzen OX₂ sind solche,
a1) die in dem in der Vorrichtung verwendeten Lösungsmittel ein Cyclisches Voltammogramm zeigen, das mindestens eine, vorzugsweise mindestens zwei chemisch reversible Reduktionsstufen besitzen,
b1) die eine, beispielsweise cyclische, organische Verbindung darstellen, die nach Aufnahme von 1 oder 2 Elektronen unter Bruch einer der σ-Bindungen in eine, beispielsweise ringoffene, Verbindung übergeht und die durch Abgabe von 1 oder 2 Elektronen wieder in die, beispielsweise cyclische, Ausgangsverbindung übergeht.

Im Sinne der Erfindung geeignete oxidierbare Substanzen RED₁ sind solche,
a2) die in dem in der Anzeigenvorrichtung verwendeten Lösungsmittel ein Cyclisches Voltammogramm zeigen, das mindestens eine, vorzugsweise zwei chemisch reversible Oxidationsstufen besitzen,
b2) die eine, beispielsweise cyclische, organische Verbindung darstellen, die nach Abgabe von 1 oder 2 Elektronen unter Bruch einer der σ-Bindungen in eine, beispielsweise ringoffene, Verbindung übergeht und die durch Aufnahme von 1 oder 2 Elektronen wieder in die; beispielsweise cyclische, Ausgangsverbindung übergeht.

Solche unter b1) und b2) genannte Verbindungen zeigen in der Regel im Cyclischen Voltammogramm eine chemisch irreversible Reduktions- bzw. Oxidationsstufe gefolgt von einer chemisch irreversiblen Oxidations- bzw. Reduktionsstufe. In der Regel werden bei Bruch oder Bildung der σ-Bindung insgesamt zwei Elektronen übertragen. Die Verbindungen unter b1) und b2) sollen aber nicht auf solche eingeschränkt werden, die das eben geschilderte Verhalten im Cyclischen Voltammogramm zeigen oder bei denen zwei Elektronen bei Bruch oder Bildung der σ-Bindung übertragen werden oder bei denen Bruch oder Bildung der σ-Bindung mit Ringöffnung oder Ringschluß verbunden sind.

Im Sinne der Erfindung geeignete OX₂ sind: 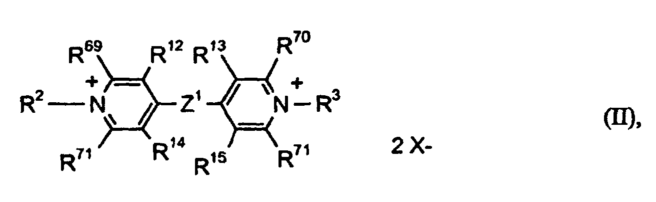 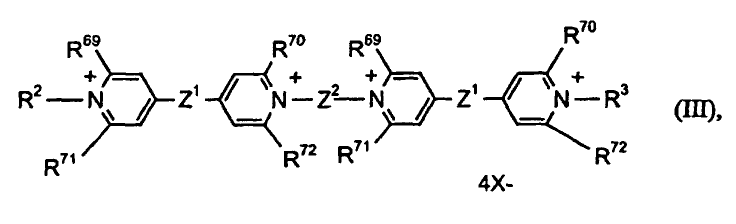 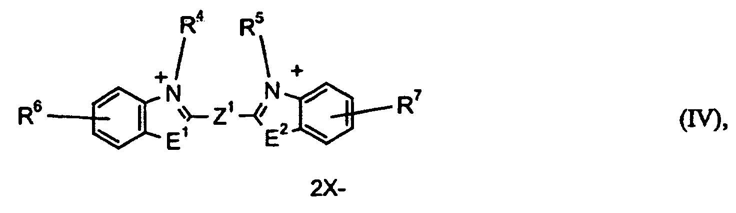 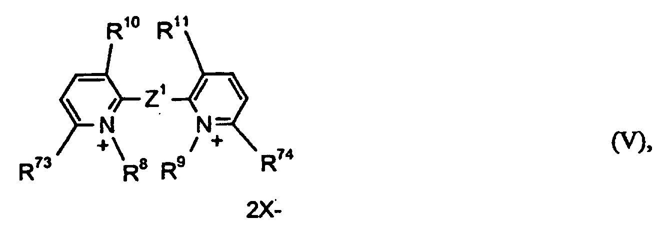 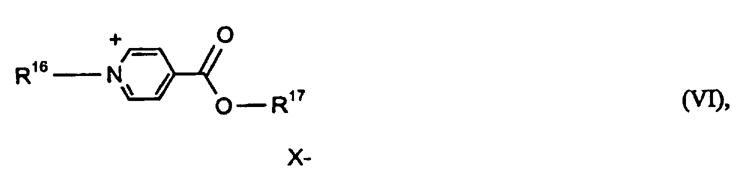 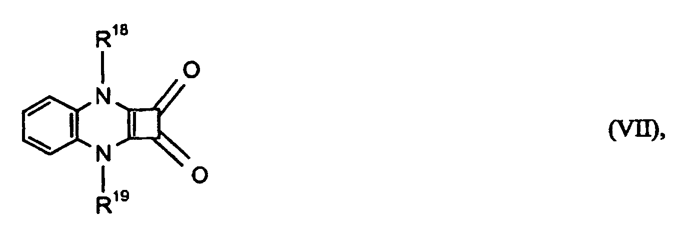 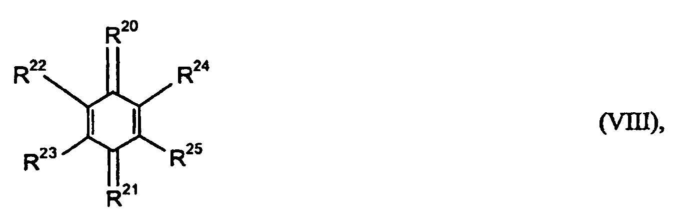 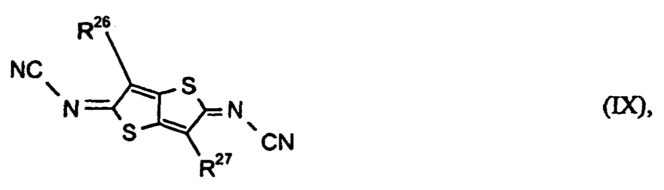 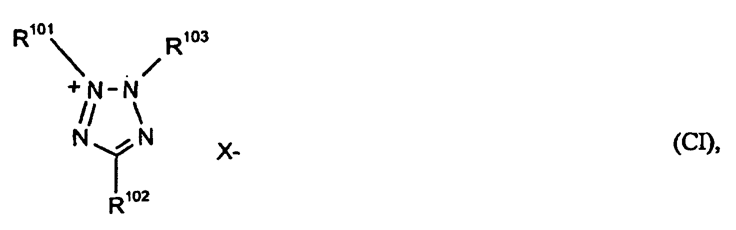 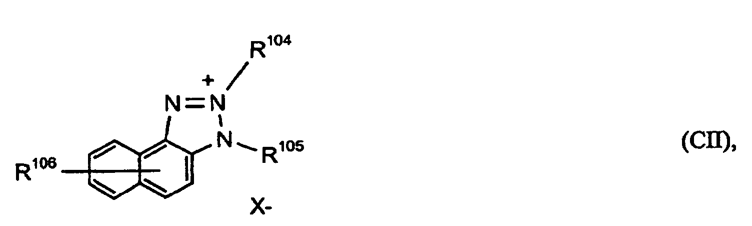 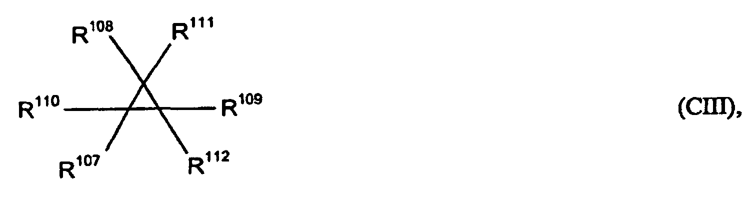 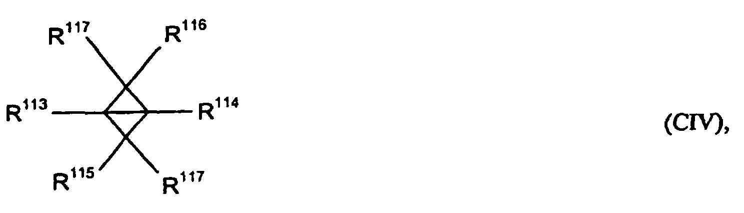 worin
- R² bis R⁵, R⁸, R⁹, R¹⁶ bis R¹⁹: unabhängig voneinander C₁- bis C₁₈-Alkyl, C₂ bis C₁₂-Alkenyl, C₄- bis C₇-Cycloalky, C₇- bis C₁₅-Aralkyl oder C₆- bis C₁₀-Aryl bedeuten oder
- R⁴; R⁵ bzw. R⁸; R⁹: gemeinsam eine -(CH₂)₂- oder -(CH₂)₃-Brücke bilden können,
- R⁶, R⁷ und R²² bis R²⁵: unabhängig voneinander Wasserstoff, C₁- bis C₄-Alkyl, C₁- bis C₄-Alkoxy, Halogen, Cyan, Nitro oder C₁- bis C₄-Alkoxycarbonyl bedeuten oder
- R²²; R²³ und/oder R²⁴; R²⁵: eine -CH=CH-CH=CH-Brücke bilden können,
- R¹⁰; R¹¹, R¹²; R¹³ und R¹⁴; R¹⁵: unabhängig voneinander Wasserstoff oder paarweise eine -(CH₂)₂-, -(CH₂)₃- oder -CH=CH-Brücke bedeuten,
- R²⁰ und R²¹: unabhängig voneinander O, N-CN, C(CN)₂ oder N-C₆- bis C₁₀-Aryl bedeuten,
- R²⁶ und R²⁷: Wasserstoff, C₁- bis C₄-Alkyl, C₁- bis C₄-Alkoxy, Halogen, Cyan, Nitro, C₁- bis C₄-Alkoxycarbonyl oder C₆- bis C₁₀-Aryl bedeuten,
- R⁶⁹ bis R⁷⁴: unabhängig voneinander Wasserstoff oder C₁- bis C₆-Alkyl bedeuten oder
- R⁶⁹; R¹² und/oder R⁷⁰; R¹³: gemeinsam eine -CH=CH-CH=CH-Brücke bilden,
- E¹ und E²: unabhängig voneinander O, S, NR¹ oder C(CH₃)₂ bedeuten oder
- E¹ und E²: gemeinsam eine -N-(CH₂)₂-N-Brücke bilden,
- R¹: C₁- bis C₁₈-Alkyl, C₂- bis C₁₂-Alkenyl, C₄- bis C₇-Cycloalkyl, C₇- bis C₁₅-Aralkyl, C₆- bis C₁₀-Aryl bedeutet,
- Z¹: eine direkte Bindung, -CH=CH-, -C(CH₃)=CH-, -C(CN)=CH-, -CCl=CCl-, -C(OH)=CH-, -CCl=CH-, -C=C-, -CH=N-N=CH-, -C(CH₃)=N-N=C(CH₃)-oder -CCI=N-N=CCI- bedeutet,
- Z²: -(CH₂)ᵣ oder -CH₂-C₆H₄-CH₂- bedeutet,
- r: eine ganze Zahl von 1 bis 10 bedeutet,
- R¹⁰¹ bis R¹⁰⁵: unabhängig voneinander C₆- bis C₁₀-Aryl oder einen ggf. benzanellierten aromatischen oder quasiaromatischen fünf- oder sechsgliedrigen heterocyclischen Ring bedeuten,
- R¹⁰⁷, R¹⁰⁹, R¹¹³ und R¹¹⁴: unabhängig voneinander einen Rest der Formeln (CV) bis (CVII) 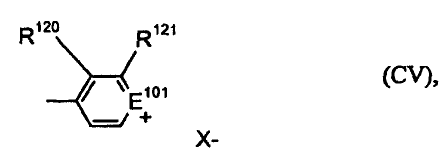 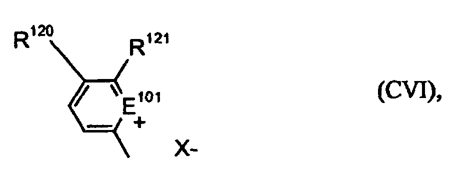 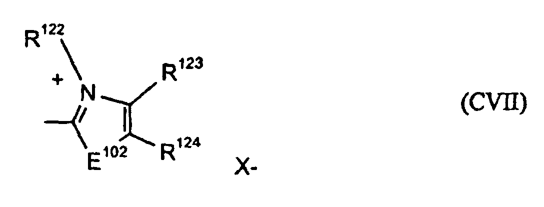 bedeuten,
- R¹⁰⁸, R¹¹⁵ und R¹¹⁶: unabhängig voneinander C₆- bis C₁₀-Aryl oder einen Rest der Formel (CV) bedeuten,
- R¹¹⁰ bis R¹¹², R¹¹⁷ und R¹¹⁸: unabhängig voneinander Wasserstoff, C₁- bis C₄-Alkyl, Halogen oder Cyano bedeuten,
- E¹⁰¹ und E¹⁰²: unabhängig voneinander O, S oder N-R¹¹⁹ bedeuten,
- R¹¹⁹ und R¹²²: unabhängig voneinander C₁- bis C₁₈-Alkyl, C₂- bis C₈-Alkenyl, C₄- bis C₇-Cycloalkyl, C₇- bis C₁₅-Aralkyl oder C₆- bis C₁₀- Aryl bedeuten,
- R¹⁰⁶, R¹²⁰, R¹²¹, R¹²³ und R¹²⁴: unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
- R¹²⁰, R¹²¹ bzw. R¹²³, R¹²⁴: gemeinsam eine -CH=CH-CH=CH-Brücke bilden und
- X⁻: ein unter den Bedingungen redox-inertes Anion bedeutet.

Im Sinne der Erfindung geeignete OX₂ sind auch Metallsalze oder Metallkomplexe, vorzugsweise von solchen Metallionen, deren Oxidationsstufen sich um 1 unterscheiden. Geeignete Metallionen OX₂/RED₂ sind beispielsweise Fe³⁺/Fe²⁺, Ni³⁺/Ni²⁺, Co³⁺/Co²⁺, Cu²⁺/Cu⁺.

Im Sinne der Erfindung geeignete RED₁ sind: 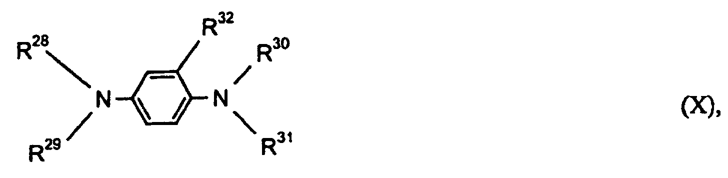 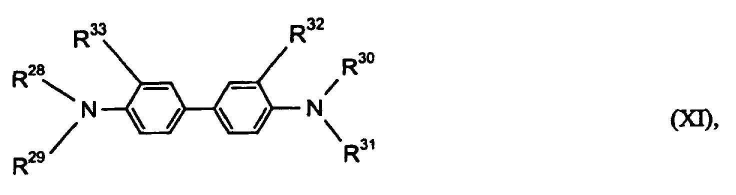 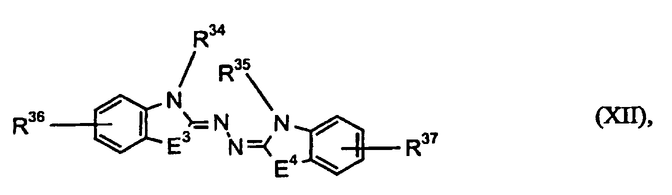 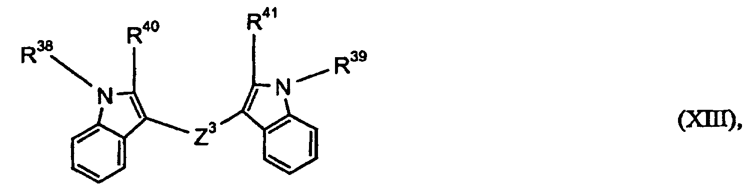 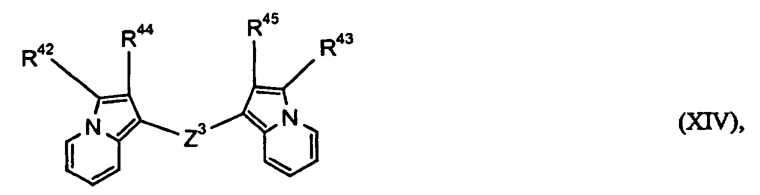 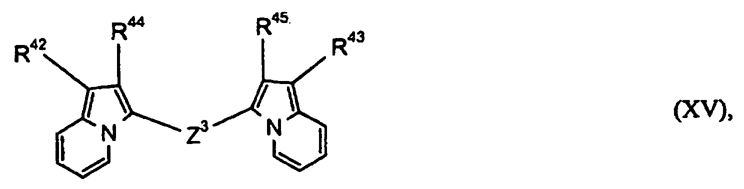 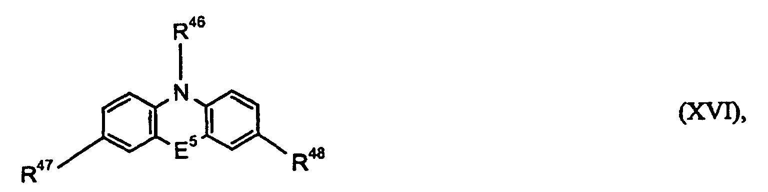 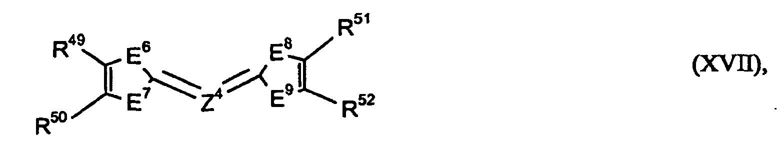 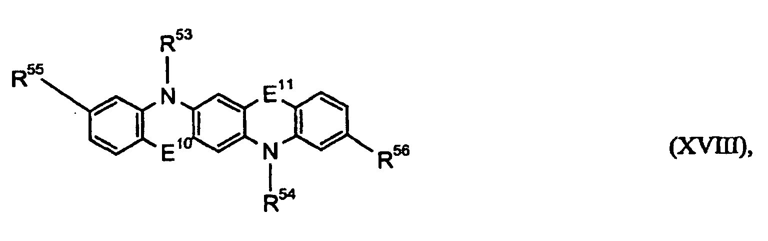 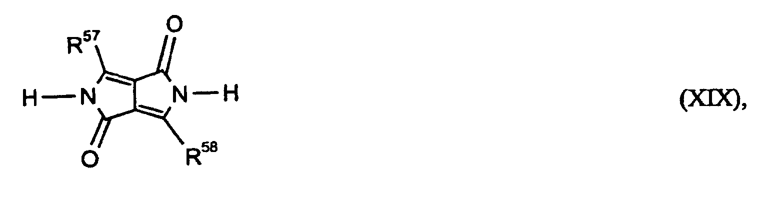 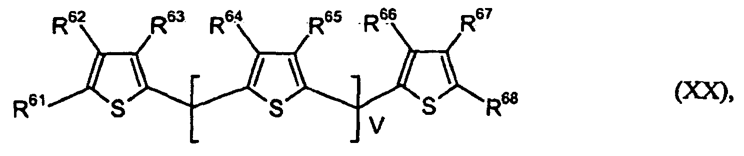 worin
- R²⁸ bis R³¹, R³⁴, R³⁵, R³⁸, R³⁹, R⁴⁶, R⁵³ und R⁵⁴: unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
- R³², R³³, R³⁶, R³⁷, R⁴⁰, R⁴¹, R⁴² bis R⁴⁵, R⁴⁷, R⁴⁸, R⁴⁹ bis R⁵² und R⁵⁵ bis R⁵⁸: unabhängig voneinander Wasserstoff, C₁- bis C₄-Alkyl, C₁- bis C₄-Alkoxy, Halogen, Cyan, Nitro, C₁- bis C₄-Alkoxycarbonyl, C₆- bis C₁₀-Aryl bedeuten
und
- R⁵⁷ und R⁵⁸: zusätzlich einen aromatischen oder quasiaromatischen fünf- oder sechsgliedrigen heterocyclischen Ring, der gegebenenfalls benzanneliert ist, bedeuten und R⁴⁸ zusätzlich NR⁷⁵R⁷⁶ bedeutet oder
- R⁴⁹; R⁵⁰ und/oder R⁵¹; R⁵²: eine -(CH₂)₃-, -(CH₂)₄-, -(CH₂)₅- oder -CH=CH-CH=CH-Brücke bilden,
- Z³: eine direkte Bindung, eine -CH=CH- oder -N=N-Brücke bedeutet,
- =Z⁴=: eine direkte Doppelbindung, eine =CH-CH= oder =N-N=Brücke bedeutet,
- E³ bis E⁵, E¹⁰ und E¹¹: unabhängig voneinander O, S, NR⁵⁹ oder C(CH₃)₂ bedeuten und
- E⁵: zusätzlich C=O oder SO₂ bedeutet,
- E³ und E⁴: unabhängig voneinander zusätzlich -CH=CH- bedeuten können,
- E⁶ bis E⁹: unabhängig voneinander S, Se oder NR⁵⁹ bedeuten,
- R⁵⁹; R⁷⁵ und R⁷⁶: unabhängig voneinander C₁- bis C₁₂-Alkyl, C₂- bis C₈-Alkenyl, C₄- bis C₇-Cycloalkyl, C₇- bis C₁₅-Aralkyl, C₆- bis C₁₀-Aryl bedeuten,
und
- R⁷⁵: zusätzlich Wasserstoff bedeutet oder R⁷⁵ und R⁷⁶ in der Bedeutung von NR⁷⁵R⁷⁶ gemeinsam mit dem N-Atom, an das sie gebunden sind, einen fünf- oder sechsgliedrigen Ring bedeuten, der gegebenenfalls weitere Heteroatome enthält,
- R⁶¹ bis R⁶⁸: unabhängig voneinander Wasserstoff, C₁- bis C₆-Alkyl, C₁- bis C₄-Alkoxy, Cyan, C₁- bis C₄-Alkoxycarbonyl oder C₆- bis C₁₀-Aryl bedeuten und
- R⁶¹; R⁶² und R⁶⁷; R⁶⁸: unabhängig voneinander zusätzlich eine -(CH₂)₃-, -(CH₂)₄- oder -CH=CH-CH=CH-Brücke bilden, und
- v: eine ganze Zahl zwischen 0 und 10 bedeutet.

Im Sinne der Erfindung geeignete RED₁ sind auch Metallsalze oder Metallkomplexe, vorzugsweise von solchen Metallionen, deren Oxidationsstufen sich um 1 unterscheiden. Geeignete Metallionen RED₁/OX₁ sind beispielsweise Fe²⁺/Fe³⁺, Ni²⁺/Ni³⁺, Co²⁺/Co³⁺, Cu⁺/Cu²⁺.

Ebenfalls im Sinne der Erfindung geeignet sind solche Redoxpaare, die über eine kovalente Brücke miteinander verknüpft sind entsprechend der Formel

Y-[-(-B-Z-)ₐ-(-B-Y-)_{b}-]_{c}-B-Z (I),

worin
- Y und Z: unabhängig voneinander für einen Rest OX₂ oder RED₁ stehen, wobei aber mindestens ein Y für OX₂ und mindestens ein Z für RED₁ steht,
wobei
OX₂ für den Rest eines reversibel elektrochemisch reduzierbaren Redoxsystems steht, und
RED₁ für den Rest eines reversibel elektrochemisch oxidierbaren Redoxsystems steht,
- B: für ein Brückenglied steht,
- c: für eine ganze Zahl von 0 bis 1000 steht, und
- a und b: unabhängig voneinander für eine ganze Zahl von 0 bis 100 stehen.

Vorzugsweise ist (a+b).c ≤ 10.000.

Hierbei ist unter reversibel elektrochemisch reduzierbar oder oxidierbar gemeint, dass die Elektronenübertragung ohne oder auch mit Änderung des σ-Gerüsts erfolgen kann ganz im Sinne der oben genannten Definition der erfindungsgemäßen OX₂ und RED₁.

Insbesondere sind mit den elektrochromen Verbindungen der Formel (I) solche der Formeln

OX₂-B-RED₁ (Ia),

OX₂-B-RED₁-B-OX₂ (Ib),

RED₁-B-OX₂-B-RED₁ (Ic),

oder

OX₂-(B-RED₁-B-OX₂)_{d}-B-RED₁ (Id)

gemeint,
worin
- OX₂, RED₁ und B: die oben angegebene Bedeutung haben und
- d: für eine ganze Zahl von 1 bis 5 steht.

Mit OX₂ und RED₁ in den Formeln (I) und (Ia) bis (Id) sind insbesondere Reste der oben beschriebenen Redoxsysteme der Formeln (II) bis (IX), (CI) bis CIV) und (X) bis (XX) gemeint, wobei die Bindung zum Brückenglied B über einen der Reste R² bis R¹⁹, R²² bis R²⁷, R²⁸ bis R⁵⁸, R⁶¹, R⁶², R⁶⁷, R⁶⁸, R¹²² oder im Falle, dass einer der Reste E¹ oder E² für NR¹ oder einer der Reste E³ bis E¹¹ für NR⁵⁹ oder einer der Reste E¹⁰¹ bis E¹⁰² für NR¹¹⁹ steht, über R¹, R⁵⁹ bzw. R¹¹⁹ erfolgt und die genannten Reste dann für eine direkte Bindung stehen, und
- B: für eine Brücke der Formeln -(CH₂)ₙ- oder
-[Y¹ₛ(CH₂)ₘ-Y²]ₒ-(CH₂)ₚ-Y³_{q}- steht, die durch C₁- bis C₄-Alkyl, C₁- bis C₄-Alkoxy, Halogen oder Phenyl substituiert sein kann,
- Y¹ bis Y³: unabhängig voneinander für O, S, NR⁶⁰, COO, CONH, NHCONH, Cyclopentandiyl, Cyclohexandiyl, Phenylen oder Naphthylen stehen,
- R⁶⁰: C₁- bis C₆-Alkyl, C₂- bis C₆-Alkenyl, C₄- bis C₇-Cycloalkyl, C₇- bis C₁₅-Aralkyl oder C₆- bis C₁₀-Aryl bedeutet,
- n: eine ganze Zahl von 1 bis 12 bedeutet,
- m und p: unabhängig voneinander eine ganze Zahl von 0 bis 8 bedeuten,
- o: eine ganze Zahl von 0 bis 6 bedeutet und
- q und s: unabhängig voneinander 0 oder 1 bedeuten.

Beispiele für Metallsalze oder Metallkomplexe, die als OX₂ oder RED₁ eingesetzt werden können, sind Fe^{3+/2+}, Ni^{3+/2+}, Co^{3+/2+}, Cu^{2+/+}, [Fe(CN)₆]^{3-/4-}, Fe₄[Fe(CN)₆]₃^{0/4-}, [Co(CN)₆]^{3-/4-}, [Fe(Cyclopentadienyl)₂]^{0/+}.

Als Gegenionen für Metallionen und kationische Komplexe kommen alle redox-inerten Anionen X⁻, wie sie später noch genauer beschrieben werden, in Frage, als Gegenionen der anionischen Komplexe alle redox-inerten Kationen M'⁺ in Frage, beispielsweise Alkalimetalle oder quaternierte Ammoniumsalze wie Na⁺, K⁺, N(CH₃)₄⁺, N(C₄H₉)₄⁺, C₆H₅CH₂N(CH₃)₃⁺ und andere.

Bevorzugt ist eine elektrochrome Anzeigevorrichtung, in der
- OX₂: für einen Rest der Formeln (II), (III), (IV), (V) oder (CI) steht,
worin
- R², R³, R⁴, R⁵, R⁸ und R⁹: unabhängig voneinander C₁ bis C₁₂-Alkyl, C₂- bis C₈-Alkenyl, C₅- bis C₇-Cycloalkyl, C₇- bis C₁₅-Aralkyl oder C₆- bis C₁₀-Aryl bedeuten,
- R⁶ und R⁷: unabhängig voneinander Wasserstoff, Methyl, Ethyl, Methoxy, Ethoxy, Fluor, Chlor, Brom, Cyan, Nitro, Methoxycarbonyl oder Ethoxycarbonyl bedeuten,
- R¹⁰; R¹¹; R¹², R¹³ und R¹⁴, R¹⁵: unabhängig voneinander für Wasserstoff oder, falls Z¹ eine direkte Bindung bedeutet, paarweise eine -(CH₂)₂-, -(CH₂)₃- oder -CH=CH-Brücke stehen,
oder
- R ⁴; R⁵ und R⁸; R⁹: unabhängig voneinander paarweise eine -(CH₂)₂- oder -(CH₂)₃-Brücke bedeuten, falls Z¹ eine direkte Bindung bedeutet, und dann
- R⁶⁹ bis R⁷⁴: unabhängig voneinander Wasserstoff oder C₁- bis C₄-Alkyl bedeuten,
- E¹ und E²: gleich sind und O, S, NR¹ oder C(CH₃)₂ bedeuten oder gemeinsam eine -N-(CH₂)₂-N-Brücke bilden,
- R¹: C₁- bis C₁₂-Alkyl, C₂- bis C₄-Alkenyl, C₅- bis C₇-Cycloalkyl, C₇- bis C₁₅-Aralkyl oder C₆- bis C₁₀-Aryl bedeutet,
- Z¹: eine direkte Bindung, -CH=CH-, -C(CH₃)=CH-, -C(CN)=CH-, -C=C- oder -CH=N-N=CH- bedeutet,
- Z²: -(CH₂)ᵣ- oder -CH₂-C₆H₄-p-CH₂- bedeutet,
- r: eine ganze Zahl zwischen 1 und 6 bedeutet,
- R¹⁰¹ bis R¹⁰³: unabhängig voneinander für einen Rest der Formeln 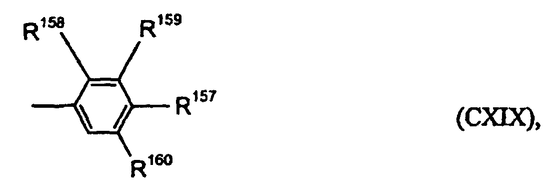 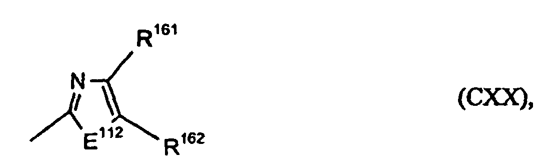
stehen, worin
- R¹⁵⁷ bis R¹⁶²: unabhängig voneinander Wasserstoff, C₁- bis C₆-Alkyl, C₁ - bis C₆-Alkoxy, Halogen, Cyano, Nitro, Bis-(C₁- bis C₄-alkyl)amino, Tris-(C₁- bis C₄-alkyl)ammonio, C₁- bis C₄-Alkoxycarbonyl oder COOH bedeuten oder
paarweise nebeneinander stehende Reste gemeinsam eine -O-(CH₂)₂₋₃-, -O-(CH₂)₁₋₂-O-, NR¹⁶³-(CH₂)₂₋₃- oder NR¹⁶³-(CH₂)₁₋₂-O-Brücke bilden oder
- R¹⁵⁸; R¹⁵⁹ und/oder R¹⁶¹; R¹⁶²: eine -CH=CH-CH=CH-Brücke bilden, die durch Methyl, Methoxy oder Chlor substituiert sein kann,
- R¹⁶³: Wasserstoff oder C₁- bis C₄-Alkyl bedeutet,
- E¹¹²: O, S oder NR¹⁶⁴ bedeutet,
- R¹⁶⁴: Wasserstoff, C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeutet und
- X⁻: ein unter den Bedingungen redox-inertes, farbloses Anion bedeutet,
- RED₁: für einen der Reste eines anodischen Redoxsystems der Formeln (X), (XI), (XII), (XIII), (XVI), (XVII), (XVIII) oder (XX) steht,
- R²⁸ bis R³¹, R³⁴, R³⁵, R³⁸, R³⁹, R⁴⁶, R⁵³ und R⁵⁴: unabhängig voneinander C₁- bis C₁₂₋Alkyl, C₂- bis C₈-Alkenyl, C₅- bis C₇-Cycloalkyl, C₇- bis C₁₅-Aralkyl oder C₆- bis C₁₀-Aryl bedeuten,
- R³², R³³, R³⁶, R³⁷, R⁴⁰, R⁴¹, R⁴⁷, R⁴⁸, R⁴⁹ bis R⁵², R⁵⁵ und R⁵⁶: unabhängig voneinander Wasserstoff, Methyl, Ethyl, Methoxy, Ethoxy, Fluor, Chlor, Brom, Cyan, Nitro, Methoxycarbonyl, Ethoxycarbonyl oder Phenyl bedeuten,
- R⁴⁸: zusätzlich NR⁷R⁷⁶ bedeutet,
- Z³: eine direkte Bindung, eine -CH=CH- oder -N=N-Brücke bedeutet,
- =Z⁴ =: eine direkte Doppelbindung, eine =CH-CH= oder =N-N= -Brücke bedeutet,
- E³ bis E⁵, E¹⁰ und E¹¹: unabhängig voneinander O, S, NR⁵⁹ oder C(CH₃)₂ bedeuten, E³ und E⁴ aber die gleiche Bedeutung haben,
- E⁶ bis E⁹: untereinander gleich sind und S, Se oder NR⁵⁹ bedeuten,
und
- E⁵: zusätzlich C=O bedeutet,
- R⁵⁹, R⁷⁵ und R⁷⁶: unabhängig voneinander C₁ bis C₁₂-Alkyl, C₂- bis C₈-Alkenyl, C₅- bis C₇-Cycloalkyl, C₇- bis C₁₅-Aralkyl oder C₆- bis C₁₀-Aryl bedeuten
und
- R⁷⁵: zusätzlich Wasserstoff bedeutet oder R⁷⁵ und R⁷⁶ in der Bedeutung von NR⁷⁵R⁷⁶ zusammen mit dem N-Atom, an das sie gebunden sind, Pyrrolidino, Piperidino oder Morpholino bedeuten,
- R⁶¹, R⁶², R⁶⁷ und R⁶⁸: unabhängig voneinander Wasserstoff, C₁- bis C₄-Alkyl, Methoxycarbonyl, Ethoxycarbonyl oder Phenyl bedeuten oder paarweise eine -(CH₂)₃- oder -(CH₂)₄-Brücke bilden,
- R⁶³ bis R⁶⁶: Wasserstoff bedeuten und
- v: eine ganze Zahl von 1 bis 6 bedeutet.

Ebenfalls bevorzugt ist eine elektrochrome Vorrichtung, die eine der Verbindungen der Formeln (Ia) bis (Id) enthält,
worin
- OX₂: für einen der Reste der Formeln (II), (III), (IV) oder (V) steht,
wobei die Bindung zum Brückenglied B über einen der Reste R² bis R¹¹ oder im Falle, dass E¹ oder E² für NR¹ steht über R¹ erfolgt und die genannten Reste dann für eine direkte Bindung stehen und alle anderen Reste die oben angeführte bevorzugte Bedeutung besitzen,
- RED₁: für einen der Reste der Formeln (X), (XI), (XII), (XIII), (XVI), (XVII), (XVIII) oder (XX) steht,
wobei die Bindung zum Brückenglied B über einen der Reste R²⁸ bis R⁴¹, R⁴⁶ bis R⁵⁶, R⁶¹, R⁶², R⁶⁷, R⁶⁸ oder im Falle, dass einer der Reste E³ bis E¹¹ für NR⁵⁹ steht, über R⁵⁹ erfolgt und die genannten Reste dann für eine direkte Bindung stehen und alle anderen Reste die oben angeführte bevorzugte Bedeutung besitzen, und
- B: für eine Brücke der Formeln -(CHR⁸⁰)ₛ-(CH₂)ₙ-(CHR⁸⁰)ₛ-,
-(CHR⁸⁰)ₛ-(CH₂)ₘ-O-(CH₂)ₚ-(CHR⁸⁰)ₛ-,
-(CHR⁸⁰)ₛ-(CH₂)ₘ-NR⁶⁰-(CH₂)ₚ-(CHR⁸⁰)ₛ-,
-(CHR⁸⁰)ₛ-(CH₂)ₘ-C₆H₄-(CH₂)ₚ-(CHR⁸⁰)ₛ-, -[O-(CH₂)ₚ]ₒ-O-,
-[NR⁶⁰-(CH₂)ₚ]ₒ-NR⁶⁰-,
-(CHR⁸⁰)ₛ-(CH₂)ₘ-OCO-C₆H₄-COO-(CH₂)ₚ-(CHR⁸⁰)ₛ-,
-(CHR⁸⁰)ₛ-(CH₂)ₘ-NHCO-C₆H₄-CONH-(CH₂)ₚ-(CHR⁸⁰)ₛ-,
-(CHR⁸⁰)ₛ-(CH₂)ₘ-NHCONH-C₆H₄-NHCONH-(CH₂)ₚ-(CHR⁸⁰)ₛ-,
-(CHR⁸⁰)ₛ-(CH₂)ₘ-OCO-(CH₂)ₜ-COO-(CH₂)ₚ-(CHR⁸⁰)-,
-(CHR⁸⁰)ₛ-(CH₂)ₘ-NHCO-(CH₂)ₜ-CONH-(CH₂)ₚ-(CHR⁸⁰)ₛ-,
-(CHR⁸⁰)ₛ-(CH₂)ₘ-NHCONH-(CH₂)ᵣ-NHCONH-(CH₂)ₚ-(CHR⁸⁰)ₛ- steht,
- R⁶⁰: Methyl, Ethyl, Benzyl oder Phenyl bedeutet,
- R⁸⁰: Wasserstoff, Methyl oder Ethyl bedeutet,
- n: eine ganze Zahl von 1 bis 10 bedeutet,
- m und p: unabhängig voneinander eine ganze Zahl von 0 bis 4 bedeuten,
- o: eine ganze Zahl von 0 bis 2 bedeutet,
- s: 0 oder 1 bedeutet, und
- t: eine ganze Zahl von 1 bis 6 bedeutet.

Ebenfalls bevorzugt ist eine elektrochrome Vorrichtung, die Mischungen der oben allgemein und bevorzugt genannten elektrochromen Substanzen enthält. Beispiele für solche Mischungen sind (II) + (CI) + (XVI), (II) + (IV) + (XII), (Ia) + (II)+ (XVI), (Ia) + (CI), ohne dass dadurch irgendeine Einschränkung ausgedrückt werden soll.

Die Mischungsverhältnisse sind in weiten Grenzen variabel. Sie erlauben die Optimierung eines gewünschten Farbtons und/oder die Optimierung der gewünschten Dynamik der Vorrichtung.

In den oben genannten Substituentenbedeutungen sind Alkylreste, auch abgewandelte, wie z. B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie C₁- bis C₄-Alkoxy, Fluor, Chlor, Hydroxy, Cyano, C₁- bis C₄-Alkoxycarbonyl oder COOH.

Unter Cycloalkylresten werden vorzugsweise solche mit 3 bis 7 C-Atomen, insbesondere mit 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind Phenyl oder Naphthylreste, insbesondere Phenylreste. Sie können durch 1 bis 3 der folgenden Reste substituiert sein: C₁bis C₆-Alkyl, C₁- bis C₆-Alkoxy, Fluor, Chlor, Brom, Cyano, Hydroxy, C₁- bis C₆-Alkoxycarbonyl oder Nitro. Zwei benachbarte Reste können auch einen Ring bilden.

Unter gegebenenfalls benzanellierten aromatischen oder quasiaromatischen fünfoder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1, 3, 4- oder 1, 2, 4-Thiadiazol, Pyridin, Chinolin, Pyrimidin und Pyrazin verstanden. Sie können durch 1 bis 3 der folgenden Reste substituiert sein: C₁- bis C₆-Alkyl, C₁- bis C₆-Alkoxy, Fluor, Chlor, Brom, Cyano, Nitro, Hydroxy, Mono- oder Di-C₁- bis C₆-allcylamino, C₁- bis C₆-Alkoxycarbonyl, C₁- bis C₆-Alkylsulfonyl, C₁- bis C₆- Alkanoylamino, Phenyl oder Naphthyl. Zwei benachbarte Reste können auch einen Ring bilden.

Die elektrochromen Substanzen sind entweder bekannt (Topics in Current Chemistry, Vol. 92, S. 1-44, (1980), Angew. Chem. 90, 927 (1978), Adv. Mater. 3, 225, (1991), DE-OS 3.917.323, J. Am. Chem. Soc. 117, 8528 (1995), J. C. S. Perkin II 1990, 1777, DE-OS 4.435.211, EP-A 476.456, EP-A 476.457, DE-OS 4.007.058, J. Org. Chem. 57, 1849 (1992) und J. Am. Chem. Soc. 99, 6120, 6122 (1977)) oder lassen sich analog herstellen. Die Verbindungen der Formel (I) lassen sich aus an sich bekannten Bausteinen beispielsweise nach folgendem Schema synthetisieren:

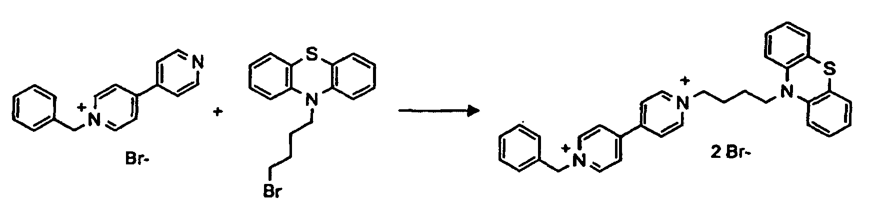

Synthetisch bedingte Ionen wie Bromid werden im Anschluß gegen redox-inerte Ionen ausgetauscht.

Die erfindungsgemäße elektrochrome Anzeigevorrichtung enthält mindestens ein Lösungsmittel, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril oder 3-Methylsulfolan.

Die erfindungsgemäße elektrochrome Lösung kann mindestens ein inertes Leitsalz enthalten. Insbesondere wenn wenigstens eine der Substanzen des Redoxpaares RED₁/OX₂ ionischer Natur ist, kann auf den Zusatz eines Leitsalzes verzichtet werden.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen X- in den Formeln (II) bis (VI), (CI), (CII) und (CV) bis (CVII) in den Metallsalzen kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat, Trifluormethylbenzolsulfonat, Hexafluorophosphat, Hexafluoroarsenat, Hexafluorosilicat, 7,8- oder 7,9-Dicarbanido-undecaborat(-1) oder (-2), die gegebenenfalls an den B- und/oder C-Atomen durch eine oder zwei Methyl-, Ethyl-, Butyl- oder Phenyl-Gruppen substituiert sind, Dodecahydro-dicarbadodecaborat(-2) oder B-Methyl-C-phenyl-dodecahydro-dicarbadodecaborat(-1).

Die Leitsalze werden vorzugsweise im Bereich 0 bis 1 mol/l eingesetzt.

Als weitere Zusätze können Verdicker eingesetzt werden, um die Viskosität der elektroaktiven Lösung zu steuern. Das kann Bedeutung haben zur Vermeidung von Segretation, d.h. der Bildung von streifiger oder fleckiger Farbbildung bei längerem Betrieb der elektrochromen Vorrichtung im eingeschalteten Zustand, und zur Steuerung der Ausbleichgeschwindigkeit nach Abschalten des Stroms.

Als Verdicker eignen sich alle für diesen Zweck üblichen Verbindungen wie z. B. Polyacrylat, Polymethacrylat (Luctite L ®), Polycarbonat oder Polyurethan.

Als weitere Zusätze für die elektrochrome Flüssigkeit kommen zur fallweisen Verstärkung des UV-Schutzes UV-Absorber in Frage. Beispiele sind UVINUL® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company), UVINUL® 3035 (Ethyl-2-cyano-3,3-diphenylacrylat, BASF), UVINUL® 3039 (2-Ethylhexyl-2-cyano-3,3-diphenylacrylat, BASF), UVINUL® 3088 (2-Ethylhexyl-p-methoxycinnamat, BASF), CHIMASSORB® 90 (2-Hydroxy-4-methoxy-benzophenon, Ciba).

Bevorzugt sind die vier Letztgenannten. Ebenfalls bevorzugt sind Mischungen von UV-Absorbern, beispielsweise der vier Letztgenannten. Bevorzugt ist die Mischung aus UVINUL® 3039 (BASF) und CHIMASSORB® 90.

Die UV-Absorber werden im Bereich 0.01 bis 2 mol/l, vorzugsweise 0.04 bis 1 mol/l eingesetzt.

Die elektrochrome Lösung enthält die elektrochromen Substanzen OX₂ und RED₁, insbesondere die der Formeln (I) bis (XX) und (CI) bis (CIV) jeweils in einer Konzentration von mindestens 10⁻⁴ mol/l, vorzugsweise 0.001 bis 0.5 mol/l. Die Gesamtkonzentration aller enthaltenen elektrochromen Substanzen liegt vorzugsweise unter 1 mol/l.

Zum Betrieb der erfindungsgemäßen elektrochromen Vorrichtung wird in konstanter, gepulster oder in seiner Amplitude sich verändernder, beispielsweise sich sinusförmig verändernder, Gleichstrom benutzt. Die Spannung hängt ab von der gewünschten Farbtiefe, insbesondere aber von den Reduktions- bzw. Oxidationspotentialen der verwendeten OX₂ und RED₁. Solche Potentiale können beispielsweise aus Topics in Current Chemistry, Volume 92, S. 1-44, (1980) oder Angew. Chem. 90, 927 (1978) oder der dort zitierten Literatur entnommen werden. Die Differenz ihrer Potentiale ist ein Richtwert für die erforderliche Spannung, jedoch kann die elektrochrome Vorrichtung bereits bei niedrigerer oder auch mit höherer Spannung betrieben werden. In vielen Fällen, z. B. bei Verwendung von OX₂ = Formel (II) oder (IV) und RED₁ = Formel (X), (XII), (XVI) oder (XVII) oder deren Verknüpfung über eine Brücke gemäß Formel (I), insbesondere Formel (Ia) bis (Id), liegt diese zum Betrieb nötige Potentialdifferenz ≤ 1 V. Solche elektrochromen Vorrichtungen können deshalb in einfacher Weise mit dem Strom aus photovoltaischen Siliciumzellen versorgt werden.

Wird die Spannung abgeschaltet, geht die erfindungsgemäße elektrochrome Vorrichtung wieder in ihren ursprünglichen Zustand zurück. Diese Löschung kann erheblich beschleunigt werden, wenn die kontaktierten Segmente bzw. Platten kurzgeschlossen werden. Auch durch mehrmaliges Umpolen der Spannung, gegebenenfalls auch bei gleichzeitiger Erniedrigung der Spannung, kann die Anzeige sehr rasch gelöscht werden.

Durch Variation der Schichtdicke der elektrochromen Vorrichtung, der Viskosität der elektrochromen Lösung und/oder der Diffusions- oder Driftfahigkeit der elektrochromen Substanzen lassen sich die Einschalt- und Ausschaltzeiten der Anzeigevorrichtung in weiten Grenzen beeinflussen. So zeigen beispielsweise dünne Schichten kürzere Schaltzeiten als dicke. Es lassen sich also schnell und langsam schaltbare Vorrichtungen bauen und so den jeweiligen Einsatzzwecken optimal anpassen.

Bei langsamen Vorrichtungen, insbesondere Anzeigevorrichtungen, kann zur Aufrechterhaltung der angezeigten Information im eingeschalteten Zustand ein Stromspar- oder Refresh-Mode benutzt werden. Nach Aufbau der anzuzeigenden Information beispielsweise durch konstante oder sich mit hoher Frequenz verändernder oder gepulster Gleichspannung ausreichender Höhe wird auf gepulste oder sich verändernde Gleichspannung niedriger Frequenz umgeschaltet, wobei während der Phasen, in denen die Spannung Null beträgt, die Kontaktierung der Segmente nicht kurzgeschlossen wird. Diese niedrige Frequenz kann beispielsweise im Bereich von 1 Hz oder niedriger liegen, wobei die Dauer der Einschalt- und Ausschaltphasen nicht gleichlang zu sein brauchen, sondern beispielsweise die Ausschaltphasen deutlich länger sein können. Da sich während der Strompausen im nicht kurzgeschlossenen Zustand die Farbtiefe der angezeigten Information nur langsam abbaut, genügen relativ kurz Stromimpulse, um diese Verluste in der anschließenden Refresh-Phase wieder auszugleichen. Man erhält so ein flackerfreies Bild mit nahezu konstanter Farbtiefe, für dessen Aufrechterhaltung aber nur ein Bruchteil des Stromes benötigt wird, der bei permanentem Stromfluß anfallen würde.

Der UV-Lichtabsorber auf Basis der erfindungsgemäßen Nanoteilchen kann in dem elektrochromen System, beispielsweise in der elektrochromen Lösung, gleichmäßig dispergiert vorliegen. Er kann auch in elektrochromen Schichtsystemen, die sich auf der leitfähigen Schicht befinden, gleichmäßig verteilt vorliegen. Beispielsweise können solche Schichten aus Lösung, in der die Nanoteilchen dispergiert und die elektrochrome Substanz gelöst oder ebenfalls dispergiert vorliegen, gegossen oder aufgerakelt werden. Nach Entfernen des Lösungsmittels erhält man dann eine die Nanoteilchen enthaltende elektrochrome Schicht. Die Nanoteilchen können aber auch in einem Kunststoff oder Lack gleichmäßig verteilt vorliegen, wobei der Kunststoff oder Lack als Überzug auf wenigstens einer der beiden Platten oder Folien aufgetragen ist.

Die Nanoteilchen können aber auch in den Platten oder Folien enthalten sein, insbesondere dann, wenn diese Platten oder Folien aus einem Kunststoffmaterial bestehen.

Es können auch alle diese Anwendungsformen der Nanoteilchen kombiniert werden, d. h. die Nanoteilchen sind sowohl im elektrochromen System als auch in einer der geschilderten Beschichtungen und/oder in den Platten oder Folien enthalten.

Das elektrochrome System oder eine der geschilderten Kunststoff oder Lackbeschichtungen oder Glasplatten oder Kunststoffplatten oder -folien der elektrochromen Vorrichtung enthalten den UV-Lichtabsorber auf Basis der erfindungsgemäßen Nanoteilchen in einer Konzentration von 0,001 bis 30, vorzugsweise 0,01 bis 10 Atom-%.

Kunststoffe und Lacke können beispielsweise sein Polycarbonat, Polyurethan, Polyester, Polyimid, Polyamid, Acrylate oder Polyacrylnitril. Die Einarbeitung der Nanoteilchen in solche Materialien kann nach gängigen Methoden erfolgen, beispielsweise gemäß WO-A 95/09 895, WO-A 92/21 315, EP-A 0 628 303.

Spezielle Ausführungsformen der obengenannten Typen 1 und 2 können beispielsweise die folgenden sein, die ebenfalls Gegenstand der Erfindung sind, wenn sie durch Nanoteilchen vor UV-Licht geschützt sind.

### Typ 1: (unverspiegelt)

aus dem Bereich Lichtschutz/Lichtfilter: Fensterscheiben für z.B. Gebäude, Straßenfahrzeuge, Flugzeuge, Eisenbahnen, Schiffe, Dachverglasungen, Autosonnendächer, Verglasung von Gewächshäusern und Wintergärten, Lichtfilter beliebiger Art;
aus dem Bereich Sicherheit/Geheimhaltung: Trennscheiben für z.B. Raumteiler in z.B. Büros, Straßenfahrzeugen, Flugzeugen, Eisenbahnen, Sichtschutzscheiben an z.B Bankschaltern, Türverglasungen, Scheiben für z.B. Motorrad- oder Pilotenhelme;
aus dem Bereich Design: Verglasung von Backöfen, Mikrowellengeräten, anderen Haushaltsgeräten, Möbeln.

### Typ 1: (verspiegelt)

Spiegel jeglicher Art, z.B. für Straßenfahrzeuge, Eisenbahnen, insbesondere plane, spärische, asphärische Spiegel und Kombinationen daraus, z.B. spärisch/asphärisch, Spiegelverglasung in Möbeln.

### Typ 2:

Anzeigevorrichtungen jeglicher Art, z.B. Segment- oder Matrixanzeigen, z.B. für Uhren, Computer, Elektrogeräte, Elektronikgeräte wie Radios, Verstärker, Fernseher, CD-Player etc., Zielanzeige in Bussen und Zügen, Abfahrts- oder Abfluganzeigen in Bahnhöfen und Flughäfen, Flachbildschirme, alle Anwendungen, die unter Typ 1 und 2 genannt sind, die mindestens eine schaltbare, statische oder variable Anzeigevorrichtung enthalten, z.B. Trennscheiben, die Anzeigen wie z.B. "Bitte nicht stören", "Schalter nicht besetzt" enthalten, z.B. Auto-Spiegel, die Anzeigen beliebiger Art enthalten, wie z.B. Anzeige der Temperatur, Störungen im Fahrzeug (z.B. Öltemperatur, offene Türen), Zeit, Himmelsrichtung etc.

### Beispiele

### Beispiel 1

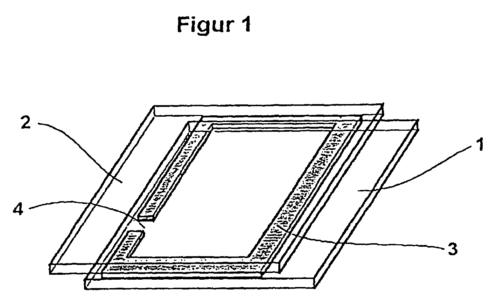

Gemäß Fig. 1 wurde eine Zelle aufgebaut. Es wurden hierzu zwei Glasplatten 1 und 2 benutzt, die auf einer Seite mit ITO beschichtet waren. Auf der anderen Seite wurden sie mit einer CeO₂-Nanoteilche beinhaltenden Schicht versehen. Die Schicht wurde folgendermaßen aufgebracht. Es wurde zuerst eine 6 Gew.-%ige Polyvinylalkohol-Lösung und eine 7 Gew.-%ige CeO₂-Dispersion jeweils in Wasser angesetzt. Die CeO₂-Nanoteilchen wurden von der Firma Rhodia, Frankfurt, bezogen und weisen eine Größenverteilung von 8 ± 2 nm auf. Diese Lösungen wurden 1:1 gemischt. Diese Mischung ist eine 4 Gew.-%ige Polyvinylalkohol-Lösung mit einem CeO₂-Anteil, der 20 Gew.-%, bezogen auf den Gesamtfeststoffanteil, entspricht.

Eine Mischung aus 97 % photohärtendem Epoxikleber DELO-Katiobond® 4594 (DELO Industrieklebstoffe, Landsberg) und 3 % Glaskugeln mit 200 µm Durchmesser wurde ringförmig 3 auf die mit ITO-beschichtete Seite der Glasplatte 1 so aufgetragen, dass eine 2 mm breite Öffnung 4 ausgespart wurde. Nun wurde die Glasplatte 2 so auf die Kleberaupe gelegt, dass die ITO-Schichten der beiden Platten 1 und 2 einander zugewandt waren und eine Geometrie entstand, wie in Fig. 1 gezeigt. Die Aushärtung des Klebers erfolgte durch 10-minütiges Belichten mit Tageslicht in der Nähe eines Fensters und anschließend für 20 min bei 105°C ohne Belichtung.

Eine Schale wurd unter Stickstoffatmosphäre mit einer Lösung gefüllt, die 0,02 molar an der elektrochromen Verbindung der Formel 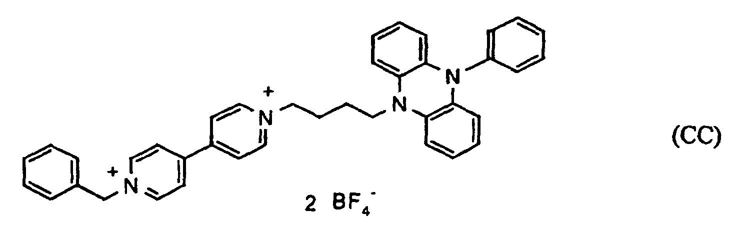 in wasserfreiem, sauerstofffreiem Propylencarbonat war.

Dann wurde die Zelle unter Stickstoffatmosphäre senkrecht so in die Schale gestellt, dass die Öffnung 4 sich unterhalb des Flüssigkeitsspiegels befand. Die Schale mit der Zelle wurde in einen Exsiccator gestellt. Dieser wurde auf 0,05 mbar evakuiert und anschließend vorsichtig mit Stickstoff belüftet. Während der Belüftung stieg die elektrochrome Lösung durch die Öffnung 4 in die Zelle hinein und füllte bis auf eine kleine Blase das gesamte Volumen aus. Die Zelle wurde aus der Lösung entnommen, unter Stickstoffatmosphäre an der Öffnung 4 gereinigt, indem sie mit einem Papiertuch abgeputzt wurde, und mit dem photochemisch härtbaren Acrylatkleber DELO-Photobond® (DELO Industrieklebstoffe, Landsberg) verschlossen.

Anschließend wurde 1 min unter Stickstoffatmosphäre mit der Lampe DELOLUX® 03 (DELO Industrieklebstoffe, Landberg) die sich in einem Abstand von 8 cm zur Öffnung 4 befand, belichtet bei Raumtemperatur über Nacht unter Stickstoffatmosphäre ausgehärtet.

Durch Anlegen einer Spannung von 0,9 V an die die beiden Platten 1 und 2 färbte sich die Zelle rasch tief grünlich blau. Durch Abschalten der Spannung und Kurzschließen der Kontakte verschwand die Färbung wieder rasch.

### Beispiel 1a (Vergleich)

Es wurde eine Zellegebaut wie in Beispiel 1, wobei jedoch Glasplatten verwendet wurden, die nur mit ITO beschichtet waren.

### Lichtstabilitätstest

Zum Test der Lichtstabilität wurden Zellen gemäß Beispiel 1 gemeinsam mit Referenzzellen gemäß Beispiel 1 a bei einer Betriebsspannung von 0,9 V in einem Testgerät Suntest CPS+ der Firma Atlas, Linsengericht-Altenhaßlau ausgerüstet mit der Filterschale A und einer Bestrahlungsleistung von 765 W/m² belichtet.

Vor Beginn der Bestrahlung wurden mit einem Absorptionsphotometer Cary AG (Firma Varian, Darmstadt) Absorptionsspektren jeder Zelle im geschalteten (0,9 V) und im ungeschalteten Zustand (O V) aufgenommen.

Die Bestrahlung erfolgte in sich jeweils mindestens verdoppelnden Intervallen (30 Minuten, 1 Stunde, 2 Stunden, 4 Stunden, 8 Stunden, 16 Stunden), so dass jede Probe am Ende insgesamt 183,5 Stunden bestrahlt worden war. Nach jedem Bestrahlungsintervall wurden wieder Absorptionsmessungen in geschaltetem und ungeschaltetem Zustand durchgeführt. Aus diesen Messungen wurden die Differenzspektren gebildet, wobei jeweils im geschalteten und ungeschalteten Zustand die aktuellen Spektren minus der Ausgangsspektren aufgetragen werden.

Die Schädigung der Zelle wurde durch die Abnahme des elektrochromen Hubes definiert. Dies bedeutet die Abnahme der Transmissionsänderung bei einer bestimmten Wellenlänge.

Ausgewertet wurde die Maximumswellenlänge bei 605 nm. Bei der Auswertung der Differenzspektren muß beachtet werden, dass Änderungen der Transmission im ungeschalteten Zustand auch in den Differenzspektren des geschalteten Zustands auftauchen und dort substrahiert werden müssen.

In der folgenden Tabelle sind die Abnahme des elektrochromen Hubs über die kumulierte Bestrahlungszeit für die erfindungsgemäße Zelle mit Nanoteilchen (gemäß Beispiel 1) und als Vergleich dazu die ohne Nanoteilchen (gemäß Beispiel 1a) aufgetragen.

Der Vergleich mit den Zellen ohne Nanoteilchen zeigt eine starke Erhöhung der Stabilität.

| In % | OH | 0,5 h | 1,5 h | 3,5 h | 7,5 h | 15,5 h | 39,5 | 87,5 | 183,5 |
|---|---|---|---|---|---|---|---|---|---|
| Zelle mit Nanoteilchen | 100 | 100 | 100 | 100 | 97 | 96 | 88 | 81 | 49 |
| Zelle ohne Nanoteilchen | 100 | 68 | 49 | 40 | 32 | - | - | - | - |

Die Schädigung der Zelle (20 % weniger elektrochromer Hub) wurde nach 78 Stunden festgestellt. Gegenüber dem ungeschützten Zustand bedeutet dies eine Verbesserung um einen Faktor 250.

## Patentansprüche

1. Elektrochrome Vorrichtung, bestehend aus zwei Platten oder Folien, von denen wenigstens eine transparent ist und die auf den einander zugewandten Seiten mit einer leitfähigen Schicht versehen sind, wobei wenigstens eine der leitfähigen Schichten transparent ist, und mit einem Dichtungsring miteinander verbunden sind, wobei durch die Platten oder Folien und den Dichtungsring ein Volumen definiert ist, in dem sich ein elektrochromes Medium befindet und die Platten oder Folien mit einer Spannungsquelle verbunden sind, **dadurch gekennzeichnet, dass** die elektrochrome Vorrichtung durch Nanoteilchen mit einem mittleren Durchmesser kleiner als 500 nm vor UV-Licht geschützt ist, wobei die Nanoteilchen in einer Konzentration von 0,001 bis 30 Atom-% gleichmäßig dispergiert vorliegen in
a) wenigstens einer der zwei Platten oder Folien und/oder
b) einem Kunststoff oder Lack, wobei der Kunststoff oder Lack als Überzug auf wenigstens eine der beiden Platten oder Folien aufgetragen ist und/oder
c) dem elektrochromen Medium.

2. Elektrochrome Vorrichtung gemäß Anspruch 1, in der das elektrochrome Medium eine elektrochrome Lösung darstellt.

3. Elektrochrome Vorrichtung gemäß einem oder mehreren der Ansprüche 1 bis 2, **dadurch gekennzeichnet, dass** wenigstens eine der beiden leitfähigen Schichten mit einer elektrochromen Schicht überzogen ist.

4. Elektrochrome Vorrichtung gemäß Anspruch 3, **dadurch gekennzeichnet, dass** die Nanoteilchen in einer Konzentration von 0,001 bis 30 Atom-% gleichmäßig dispergiert vorliegen in
a) wenigstens einer der zwei Platten oder Folien und/oder
b) einem Kunststoff oder Lack, wobei der Kunststoff oder Lack als Überzug auf wenigstens einer der beiden Platten oder Folien aufgetragen ist und/oder
c) dem elektrochromen Medium und/oder
d) wenigstens einer der leitfähigen Schichten.

5. Elektrochrome Vorrichtung gemäß einem oder mehreren der Ansprüche 1 bis 4, **dadurch gekennzeichnet, dass** die Nanoteilchen aus Materialien auf Basis SiC, AlSi, Fe₂O₃, Fe₃O₄, TiO₂, ZnO, GaP, CeO₂, ZnS, SnO₂, Si_{y}Ge_{1-y}, WₓMo₁₋ₓO₃, NiO, Bi₂O₃, In₂O₃, HfO₂, BaTiO₃, CaTiO₃, Ge, AlP, GaN, worin 0,7 ≤y ≤1 und 0 ≤x ≤1 sind.

6. Elektrochrome Vorrichtung gemäß einem oder mehreren der Ansprüche 1 bis 5, **dadurch gekennzeichnet, dass** die Nanoteilchen aus Materialien auf Basis SiC, AlSi, Silberhalogenidemulsionsschicht, Fe₂O₃, Fe₃O₄, TiO₂, ZnO, CeO₂, WₓMo₁₋ₓO₃, BaTiO₃, CaTiO₃ bestehen, worin 0 ≤x ≤1 sind.

7. Elektrochrome Vorrichtung gemäß einem oder mehreren der Ansprüche 1 bis 6, **dadurch gekennzeichnet, dass** die Nanoteilchen überwiegend aus Silicium und/oder festen Verbindungen bestehen, in denen Silicium im stöchiometrischen Überschuss vorliegt.

8. Elektrochrome Vorrichtung gemäß einem oder mehreren der Ansprüche 1 bis 7, **dadurch gekennzeichnet, dass** die Nanoteilchen einen mittleren Durchmesser von <100 nm aufweisen, bevorzugt <50 nm, besonders bevorzugt <20 nm.

9. Elektrochrome Vorrichtung gemäß einem oder mehreren der Ansprüche 1 bis 8, **dadurch gekennzeichnet, dass** die Nanoteilchen kugelförmig oder nahezu kugelförmig sind.

10. Elektrochrome Vorrichtung gemäß einem oder mehreren der Ansprüche 1 bis 9, **dadurch gekennzeichnet, dass** die Nanoteilchen eine Kern-Hüllenstruktur aufweisen.

11. Elektrochrome Vorrichtung gemäß einem oder mehreren der Ansprüche 1 bis 10, **dadurch gekennzeichnet, dass** die Hülle organisch modifiziert ist.

12. Elektrochrome Vorrichtung gemäß einem oder mehreren der Ansprüche 1 bis 11, **dadurch gekennzeichnet, dass** die festen Verbindungen, in denen Silicium im stöchiometrischen Überschuss vorliegt, Verbindungen der Formel SiₓZ₁₋ₓ sind, worin 0,5 <x ≤1 ist und Z für C, N, O, Ge, Ca, Ba oder Sr oder Mischungen davon steht.

13. Elektrochrome Vorrichtung gemäß einem oder mehreren der Ansprüche 1 bis 12, **dadurch gekennzeichnet, dass** die festen Verbindungen, in denen Silicium im stöchiometrischen Überschuss vorliegt, eine Kern-Hüllen-Struktur aufweisen.

14. Elektrochrome Vorrichtung gemäß einem oder mehreren der Ansprüche 1 bis 13, **dadurch gekennzeichnet, dass** die Nanoteilchen aus einem Kern aus Titannitrid und einer Hülle aus Silicium bestehen, wobei der Silicium-Volumenanteil im Mittel mindestens 30 % bezogen auf die Nanoteilchen ist.

15. Elektrochrome Vorrichtung gemäß einem oder mehreren der Ansprüche 1 bis 14, **dadurch gekennzeichnet, dass** die Nanoteilchen eine Teilchengrößenverteilung mit einer maximalen Halbwertsbreite von 40 nm aufweisen, vorzugsweise 30 nm, besonders bevorzugt 20 nm.

16. Elektrochrome Vorrichtung gemäß einem oder mehreren der Ansprüche 1 bis 15, **dadurch gekennzeichnet, dass** die Nanoteilchen von einer Oxidschicht mit einer Dicke von 1 bis 300 nm umhüllt sind.

17. Elektrochrome Vorrichtung gemäß einem oder mehreren der Ansprüche 1 bis 16, **dadurch gekennzeichnet, dass** die Hülle ein Oxid des Materials des Nanoteilchens darstellt oder aus einem anderen, im Sichtbaren transparenten, Material besteht, dessen Brechungsindex dem des Nanoteilchens ähnlich ist.

18. Elektrochrome Vorrichtung gemäß einem oder mehreren der Ansprüche 1 bis 17, **dadurch gekennzeichnet, dass** diesen Nanoteilchen zusätzlich Partikel aus Oxiden und/oder Nitriden von Metallen beigemischt sind, die im roten Spektralbereich von 600 nm < λ < 700 nm stärker absorbieren als im blau-grünen Spektralbereich von 400 nm < λ < 550 nm.

19. Elektrochrome Vorrichtung gemäß Anspruch 18, **dadurch gekennzeichnet, dass** die zusätzlichen Partikel aus Titannitrid mit einem mittleren Partikeldurchmesser von 1 bis 400 nm, vorzugsweise 1 bis 100 nm, besonders bevorzugt 1 bis 50 nm, bestehen oder Agglomerate aus diesen Titannitrid-Primärpartikeln sind.

20. Elektrochrome Vorrichtung gemäß Anspruch 19, **dadurch gekennzeichnet, dass** die zusätzlichen Partikel Aluminum-Natrium-Silikate sind.

## Claims

1. Electrochromic device consisting of two plates or films of which at least one is transparent and which are provided on the facing sides with a conductive layer, at least one conductive layer being transparent, and are joined to one another with a sealing ring, the plates or films and the sealing ring defining a volume within which there is an electrochromic medium, and the sheets or films being connected to a voltage source, **characterized in that** the electrochromic device is protected against UV light by nanoparticles which have an average diameter of less than 500 nm and are in uniform dispersion in a concentration of from 0.001 to 30 atom-%
a) in at least one of the two sheets or films and/or
b) in a polymer or coating material, the polymer or coating material being applied as a coating to at least one of the two sheets or films, and/or
c) in the electrochromic medium.

2. Electrochromic device according to Claim 1, in which the electrochromic medium is an electrochromic solution.

3. Electrochromic device according to one or both of Claims 1 and 2, **characterized in that** at least one of the two conductive layers has been coated with an electrochromic layer.

4. Electrochromic device according to Claim 3, **characterized in that** the nanoparticles are in uniform dispersion in a concentration of from 0.001 to 30 atom-%
a) in at least one of the two sheets or films and/or
b) in a polymer or coating material, the polymer or coating material being applied as a coating to at least one of the two sheets or films, and/or
c) in the electrochromic medium and/or
d) in at least one of the conductive layers.

5. Electrochromic device according to one or more of Claims 1 to 4, **characterized in that** the nanoparticles are made of materials based on SiC, AlSi, Fe₂O₃, Fe₃O₄, TiO₂, ZnO, GaP, CeO₂, ZnS, SnO₂, Si_{y}Ge_{1-y}, WₓMo₁₋ₓO₃, NiO, Bi₂O₃, In₂O₃, HfO₂, BaTiO₃, CaTiO₃, Ge, AlP, GaN, in which 0.7 ≤y ≤1 and 0 ≤x ≤1.

6. Electrochromic device according to one or more of Claims 1 to 5, **characterized in that** the nanoparticles consist of materials based on SiC, AlSi, silver halide emulsion layer, Fe₂O₃, Fe₃O₄, TiO₂, ZnO, CeO₂, WₓMo₁₋ₓO₃, BaTiO₃, CaTiO₃ in which 0 ≤ x ≤1.

7. Electrochromic device according to one or more of Claims 1 to 6, **characterized in that** the nanoparticles consist predominantly of silicon and/or of solid compounds in which silicon is present in stoichiometric excess.

8. Electrochromic device according to one or more of Claims 1 to 7, **characterized in that** the nanoparticles have an average diameter of <100 nm, preferably <50 nm and, with particular preference, <20 nm.

9. Electrochromic device according to one or more of Claims 1 to 8, **characterized in that** the nanoparticles are spherical or virtually spherical.

10. Electrochromic device according to one or more of Claims 1 to 9, **characterized in that** the nanoparticles have a core-shell structure.

11. Electrochromic device according to one or more of Claims 1 to 10, **characterized in that** the shell has been organically modified.

12. Electrochromic device according to one or more of Claims 1 to 11, **characterized in that** the solid compounds in which silicon is present in stoichiometric excess are compounds of the formula SiₓZ₁₋ₓ
in which 0.5 < x ≤1 and Z represents C, N, O, Ge, Ca, Ba or Sr or mixtures thereof.

13. Electrochromic device according to one or more of Claims 1 to 12, **characterized in that** the solid compounds in which silicon is present in stoichiometric excess have a core-shell structure.

14. Electrochromic device according to one or more of Claims 1 to 13, **characterized in that** the nanoparticles consist of a core of titanium nitride and a shell of silicon, the silicon proportion by volume being on average at least 30% based on the nanoparticles.

15. Electrochromic device according to one or more of Claims 1 to 14, **characterized in that** the nanoparticles have a particle size distribution with a maximum mid-peak width of 40 nm, preferably 30 nm and, with particular preference, 20 nm.

16. Electrochromic device according to one or more of Claims 1 to 15, **characterized in that** the nanoparticles have a covering of an oxide layer having a thickness of from 1 to 300 nm.

17. Electrochromic device according to one or more of Claims 1 to 16, **characterized in that** the shell is an oxide of the material of the nanoparticle or consists of another material which is transparent in the visible range and whose refractive index is similar to that of the nanoparticle.

18. Electrochromic device according to one or more of Claims 1 to 17, **characterized in that** mixed in with these nanoparticles in addition are particles of oxides and/or nitrides of metals which absorb more strongly in the red spectral range from 600 nm < λ < 700 nm than in the blue-green spectral range from 400 nm < λ < 550 nm.

19. Electrochromic device according to Claim 18, **characterized in that** the additional particles consist of titanium nitride having an average particle diameter of from 1 to 400 nm, preferably from 1 to 100 nm, and, with particular preference, from 1 to 50 nm, or are agglomerates of these titanium nitride primary particles.

20. Electrochromic device according to Claim 19, **characterized in that** the additional particles are aluminium sodium silicates.

## Revendications

1. Dispositif électrochrome consistant en deux plaques ou feuilles dont au moins l'une est transparente et qui sont munies d'une couche conductrice sur les côtés tournés l'un vers l'autre, où au moins l'une des couches conductrices est transparente, et qui sont liées l'une à l'autre par un anneau d'étanchéité, où les plaques ou feuilles et l'anneau d'étanchéité définissent un volume dans lequel se trouve un milieu électrochrome et les plaques ou feuilles sont reliées à une source de tension, **caractérisé en ce que** le dispositif électrochrome est protégé contre la lumière UV par des nanoparticules ayant un diamètre moyen inférieur à 500 nm, où les nanoparticules sont présentes sous forme uniformément dispersée en une concentration de 0,001 à 30 atomes% dans
a) au moins l'une des deux plaques ou feuilles et/ou
b) une matière plastique ou laque, où la matière plastique ou laque est appliquée sous forme de revêtement sur au moins l'une des deux plaques ou feuilles et/ou
c) le milieu électrochrome.

2. Dispositif électrochrome selon la revendication 1 où le milieu électrochrome représente une solution électrochrome.

3. Dispositif électrochrome selon une ou plusieurs des revendications 1 à 2 **caractérisé en ce qu'**au moins l'une des deux couches conductrices est revêtue d'une couche électrochrome.

4. Dispositif électrochrome selon la revendication 3 **caractérisé en ce que** les nanoparticules sont présentes sous forme uniformément dispersée en une concentration de 0,001 à 30 atomes% dans
a) au moins l'une des deux plaques ou feuilles et/ou
b) une matière plastique ou laque, où la matière plastique ou laque est appliquée sous forme de revêtement sur au moins l'une des deux plaques ou feuilles et/ou
c) le milieu électrochrome et/ou
d) au moins l'une des couches conductrices.

5. Dispositif électrochrome selon une ou plusieurs des revendications 1 à 4 **caractérisé en ce que** les nanoparticules sont constituées par des substances à base de SiC, AlSi, Fe₂O₃, Fe₃O₄, TiO₂, ZnO, GaP, CeO₂, ZnS, SnO₂, Si_{y}Ge_{1-y}, WₓMo₁₋ₓO₃, NiO, Bi₂O₃, In₂O₃, HfO₂, BaTiO₃, CaTiO₃, Ge, AlP, GaN, où 0,7 ≤ y ≤ 1 et 0 ≤ x ≤ 1.

6. Dispositif électrochrome selon une ou plusieurs des revendications 1 à 5 **caractérisé en ce que** les nanoparticules sont constituées par des substances à base de SiC, AlSi, une couche d'émulsion d'halogénure d'argent, Fe₂O₃, Fe₃O₄, TiO₂, ZnO, CeO₂, WₓMo₁₋ₓO₃, BaTiO₃, CaTiO₃ où 0 ≤ x ≤ 1.

7. Dispositif électrochrome selon une ou plusieurs des revendications 1 à 6, **caractérisé en ce que** les nanoparticules consistent principalement en silicium et/ou en composés solides dans lesquels le silicium est présent en excès stoechiométrique.

8. Dispositif électrochrome selon une ou plusieurs des revendications 1 à 7 **caractérisé en ce que** les nanoparticules présentent un diamètre moyen inférieur à 100 nm, de préférence inférieur à 50 nm, de manière particulièrement préférée inférieur à 20 nm.

9. Dispositif électrochrome selon une ou plusieurs des revendications 1 à 8 **caractérisé en ce que** les nanoparticules sont sphériques ou sensiblement sphériques.

10. Dispositif électrochrome selon une ou plusieurs des revendications 1 à 9 **caractérisé en ce que** les nanoparticules présentent une structure noyau-enveloppe.

11. Dispositif électrochrome selon une ou plusieurs des revendications 1 à 10 **caractérisé en ce que** l'enveloppe est modifiée organiquement.

12. Dispositif électrochrome selon une ou plusieurs des revendications 1 à 11 **caractérisé en ce que** les composés solides dans lesquels le silicium est présent en excès stoechiométrique sont des composés de formule SiₓZ₁₋ₓ où 0,5 < x ≤ 1 et Z représente C, N, O, Ge, Ca, Ba ou Sr ou des mélanges de ceux-ci.

13. Dispositif électrochrome selon une ou plusieurs des revendications 1 à 12 **caractérisé en ce que** les composés solides dans lesquels le silicium est présent en excès stoechiométrique présentent une structure noyau-enveloppe.

14. Dispositif électrochrome selon une ou plusieurs des revendications 1 à 13 **caractérisé en ce que** les nanoparticules consistent en un noyau en nitrure de titane et en une enveloppe en silicium, où la proportion volumique de silicium est en moyenne d'au moins 30 % par rapport aux nanoparticules.

15. Dispositif électrochrome selon une ou plusieurs des revendications 1 à 14 **caractérisé en ce que** les nanoparticules présentent une répartition granulométrique ayant une largeur à mi-hauteur maximale de 40 nm, de préférence de 30 nm, de manière particulièrement préférée de 20 nm.

16. Dispositif électrochrome selon une ou plusieurs des revendications 1 à 15 **caractérisé en ce que** les nanoparticules sont entourées par une couche d'oxyde d'une épaisseur de 1 à 300 nm.

17. Dispositif électrochrome selon une ou plusieurs des revendications 1 à 16 **caractérisé en ce que** l'enveloppe est un oxyde de la substance de la nanoparticule ou consiste en une autre substance, transparente dans le domaine visible, dont l'indice de réfraction est analogue à celui de la nanoparticule.

18. Dispositif électrochrome selon une ou plusieurs des revendications 1 à 17 **caractérisé en ce que** des particules d'oxydes et/ou de nitrures de métaux qui absorbent plus fortement dans le domaine spectral rouge de 600 nm < λ < 700 nm que dans le domaine spectral bleu-vert de 400 nm < λ < 550 nm sont ajoutées en outre à ces nanoparticules.

19. Dispositif électrochrome selon la revendication 18 **caractérisé en ce que** les particules supplémentaires consistent en nitrure de titane ayant un diamètre de particule moyen de 1 à 400 nm, de préférence de 1 à 100 nm, de manière particulièrement préférée de 1 à 50 nm, ou sont des agglomérats de ces particules primaires de nitrure du titane.

20. Dispositif électrochrome selon la revendication 19 **caractérisé en ce que** les particules supplémentaires sont des silicates d'aluminium et de sodium.
